# EUROPÄISCHE PATENTSCHRIFT

(11) **EP 1 444 638 B1**
(45) Veröffentlichungstag und Bekanntmachung des Hinweises auf die Patenterteilung: **29.03.2006**
(21) Anmeldenummer: 02791579.2
(22) Anmeldetag: 15.11.2002
(51) Int. Cl.: G06K 7/00, G06K 7/015

(54) **KONTAKTIEREINRICHTUNG FÜR KARTENFÖRMIGE INFORMATIONSTRÄGER UND HIERMIT AUSGESTATTETE LESEEINHEIT**
CONTACTING DEVICE FOR CARD-TYPE INFORMATION CARRIERS AND READER UNIT FITTED THEREWITH
DISPOSITIF DE MISE EN CONTACT POUR SUPPORTS D'INFORMATIONS SOUS FORME DE CARTE, ET UNITE DE LECTURE POURVUE D'UN TEL DISPOSITIF

(30) Priorität: 16.11.2001 AT 18092001
(43) Veröffentlichungstag der Anmeldung: 11.08.2004
(73) Patentinhaber: Omnikey GmbH, 65396 Walluf (DE)
(72) Erfinder: SCHMID, Kurt, A-4030 Linz (AT)
(74) Vertreter: Secklehner, Günter
(86) Internationale Anmeldenummer: PCT/AT2002/000317
(87) Internationale Veröffentlichungsnummer: WO 2003/042901

(56) Entgegenhaltungen:
- EP-A- 0 702 315
- EP-A- 0 831 413
- DE-U- 29 706 664
- US-A- 5 517 011

## Beschreibung

Die Erfindung betrifft eine Kontaktiereinrichtung für kartenförmige Informationsträger mit einem elektronischen Datenspeicherelement sowie eine Leseeinheit mit elektronischen Schaltkreisen zumindest zum Lesen von kartenförmigen Informationsträgern, wie dies in den Ansprüchen 1 und 22 angegeben ist.

Der nächste Stand der Technik, die US 6,070,797 A beschreibt einen tragbaren Leser für Chipkarten, insbesondere für sogenannte Smart-Cards. Dieser Leser weist ein blockförmiges Gehäuse auf, an dessen Oberseite eine LCD-Anzeige ausgebildet ist und dessen Rück- bzw. Unterseite einen oder mehrere elektrische Kontakte aufweist, welche mit den elektrischen Kontaktstellen auf einer entsprechenden Chipkarte elektrisch verbindbar sind, wenn die Karte gegenüber dem Leser entsprechend ausgerichtet wird. Zur vereinfachten Positionierung dieser Karte relativ zum blockförmigen Gehäuse des Lesers ist am Gehäuse zumindest ein begrenzt verstellbar gelagertes Positionierelement ausgebildet. Zusätzlich zu diesem gegenüber dem Gehäuse des Lesers verstellbaren Positionierelement kann auch ein fixes Positionierelement in Form einer Anschlagkante für eine auszulesende Karte ausgebildet sein. Um mit den Kontaktstellen der Chipkarte kontaktieren zu können, ist der Leser mit seinen elektrischen Kontakten auf die entsprechende Flachseite der Chipkarte aufzulegen und auszurichten. Nachteilig ist dabei, daß die Kontakte an der Unterseite des Lesers ständig zugreifbar sind und dadurch äußeren Einflüssen, wie z.B. Verschmutzungen, mechanischen Krafteinwirkungen und Berührungen durch den Benutzer ausgesetzt sind, wodurch längerfristig Kontaktierungsprobleme auftreten können.

Die US 5,821,516 A beschreibt einen weiteren tragbaren Leser für Chipkarten. Dieser Leser ist schlitzlos ausgeführt und es sind der kartenförmige Datenträger und der Leser schichtartig übereinander zu legen und per Fingerdruck aneinander zu drücken, um eine Kontaktverbindung aufzubauen. Als Positionierhilfsmittel des Lesers gegenüber der Karte sind an dessen Unterseite leistenförmige Führungen ausgebildet. Diese Führungsleisten können optional auch von einer nachgiebigen Schicht aus Kunststoff überbrückt sein. Die Kontaktelemente des Lesers können dabei via einen manuell zu betätigenden Schalter gegenüber dessen Gehäuse aus- und eingefahren werden. Gemäß einer anderen Ausführungsform wird der Leser schräg über die Kartenoberfläche aufgelegt und tritt dabei mit dem Chip auf dem kartenförmigen Datenträger in Verbindung. Mittels einem vom Benutzer zu betätigenden Schalter an der Oberseite des Gehäuses kann der Leser aktiviert werden. Nachteilig ist dabei, daß das exakte Ausrichten des kartenförmigen Datenträgers gegenüber dem Leser mühselig bzw. zeitaufwendig ist, und der Leser und der kartenförmige Datenträger stets aneinander gedrückt werden müssen, um die Verbindung zwischen dem Leser und dem kartenförmigen Datenträger aufrecht zu erhalten. Zudem verlangt der Kommunikationsaufbau zwischen dem Leser und dem kartenförmigen Datenträger dem Benutzer einiges an Geschicklichkeit ab.

Die EP 0 702 315 A2 offenbart eine weitere elektronische Lesevorrichtung für kartenförmige Informationsträger. Diese Lesevorrichtung umfasst ein längliches Gehäuse, in welchem quer zur Längserstreckung ein schlitzförmiger Durchbruch ausgebildet ist. Dieser schlitzförmige Durchbruch bildet in einem Endbereich die Einführöffnung für die Breitseite eines kartenförmigen Informationsträgers aus und weist im dazu gegenüberliegenden Endbereich einen gegenüber dem Führungsquerschnitt im Durchbruch verengten Öffnungsquerschnitt auf, welcher als Auslass- bzw. Austrittsöffnung für eventuelle Verunreinigungen im Durchbruch fungiert. Der schlitzförmige Durchbruch weist dabei innere Wandflächen auf, welche senkrecht zur Längserstreckung des Gehäuses verlaufen, sodass ein zugeführter Informationsträger rechtwinkelig zur Längserstreckung des Gehäuses in den Durchbruch einschiebbar ist, bis die vordere Breitseitenkante des kartenförmigen Informationsträgers an den sich verjüngenden inneren Wandflächen des Durchbruchs zur Anlage kommt, wobei ein Durchqueren des Informationsträgers durch das Gehäuse der Lesevorrichtung unterbunden ist. Im schlitzförmigen Durchbruch angesammelter Schmutz kann jedoch via die Auslassöffnung aus dem Durchbruch herausfallen. Gemäß einer weiteren Ausführungsform ist innerhalb des Durchbruchs im Gehäuse ein vertikal zur Zuführrichtung des Informationsträgers verstellbares, zungenartiges Betätigungselement für eine elektrische Schaltvorrichtung angeordnet. Dieses Betätigungselement für die Schaltvorrichtung kann dabei eine Anschlagnase für die vordere Breitseite eines zugeführten Informationsträgers aufweisen und verhindert dadurch ein Hindurchtreten des Informationsträgers durch den Durchbruch. Mittels diesem innerhalb des Durchbruchs verschwenkbar angeformten Anschlagelement, welches gleichzeitig als Betätigungselement für die Schaltvorrichtung dient, kann ein in Kontaktierungsposition befindlicher Informationsträger erfasst werden.

Der vorliegenden Erfindung liegt die Aufgabe zugrunde, eine Kontaktiereinrichtung für kartenförmige Informationsträger zu schaffen, die eine hohe Alltagstauglichkeit aufweist und in der Handhabung möglichst problemlos ist. Eine weitere, eigenständige Aufgabe der Erfindung liegt darin, eine Leseeinheit für kartenförmige Informationsträger zu schaffen, die kompakt aufgebaut ist und den Anforderungen häufigen Gebrauchs gerecht wird.

Eine Aufgabe der Erfindung wird durch die Merkmale des Anspruches 1 gelöst. Die sich durch die Ausgestaltung gemäß Anspruch 1 ergebenden Vorteile liegen darin, daß eine derartige Kontaktiereinrichtung besonders kompakt aufgebaut werden kann und daher ohne wesentliche Einschränkungen besonders komfortabel getragen bzw. problemlos in Taschen von Kleidungsstücken eingesteckt werden kann. Insbesondere ist es dadurch ermöglicht, die Kontaktiereinrichtung ständig bei sich tragen zu können, wodurch die jeweiligen Funktionen bzw. die Nutzungsmöglichkeiten der jeweiligen Kontaktiereinrichtung jederzeit verfügbar sind. Die bevorzugt fixen Anschlagelemente der Kontaktiereinrichtung erleichtern dabei die exakte Positionierung bzw. Ausrichtung eines zu bearbeitenden, insbesondere eines zu lesenden Informationsträgers relativ zum langgestreckten Gehäuse oder Aufnahmekörper der Kontaktiereinrichtung. Durch starre bzw. feste Anschlagkanten der Anschlagelemente ist aber auch ein überaus robuster Aufbau der Kontaktiereinrichtung möglich geworden. Insbesondere ist die Gefahr eines Abbrechens oder Verbiegens von Teilen der Kontaktiereinrichtung kaum gegeben. Die erfindungsgemäße Kontaktiereinrichtung kann also problemlos in Taschen oder dgl. eingesteckt werden, ohne daß eine allzu hohe Gefahr von Beschädigungen besteht. Zudem begünstigen die Anschlagelemente eine mühelose und intuitive Positionierung des Informationsträgers gegenüber den elektrischen Kontaktelementen. Weiters ist von Vorteil, daß vom Benutzer keinerlei Haltekräfte aufgewendet werden müssen, damit der Informationsträger und die Kontaktiereinrichtung in der ordnungsgemäß kontaktierenden Position verbleiben können. Insbesondere kann die Kontaktiereinrichtung mitsamt dem kartenförmigen Datenträger beiseite gelegt werden, ohne daß die Verbindung zwischen dem Informationsträger und der Kontaktiereinrichtung abbricht. Wesentlich ist weiters, daß trotz der kompakten Abmessungen der Kontaktiereinrichtungen keine filigranen Positioniermittel erforderlich sind, welche bei Unachtsamkeit in der Handhabung der Kontaktieseinrichtung leicht beschädigt oder deformiert werden könnten. Wesentlich ist auch, daß die elektrischen Kontaktelemente der Kontaktiereinrichtung innerhalb eines Durchbruches des Gehäuses angeordnet sind, und somit vor äußeren Krafteinwirkungen oder sonstigen Einflüssen geschützt sind. Die Gefahr einer Beschädigung, insbesondere des Zerkratzens oder Verbiegens der Kontaktelemente ist also weitgehendst beseitigt. Zudem wird dadurch erreicht, daß die empfindlichen Kontaktelemente vor direktem Zugriff bzw. vor Fingerabdrücken geschützt sind, wodurch längerfristig eine gute Kontaktierung mit den Kontaktierungsflächen eines kartenförmigen Informationsträgers gewährleistet werden kann. Die mechanisch besonders einfachen, baulichen Maßnahmen bewirken eine relativ hohe Robustheit bzw. Alltagstauglichkeit und gewährleisten eine langfristige Funktionstüchtigkeit und Positioniergenauigkeit für zu bearbeitende Informationsträger, wobei durch die besondere Anordnung bzw. Ausrichtung der Anschlagelemente auch ein kompakter Aufbau des Gehäuses bzw. Aufnahmekörpers ermöglicht ist. Darüber hinaus kann eine Beaufschlagung des Informationsträgers mit elektrischer Energie oder eine Einleitung von bestimmten Betriebsfunktionen der Kontaktiereinrichtung automatisiert bzw. gezielt gesteuert werden. Zudem ist eine baulich einfache und zuverlässige Erfassungsvorrichtung angegeben, die eine einfache Detektierung eines ordnungsgemäß zugeführten Informationsträgers ermöglicht. Insbesondere wird das physische Vorliegen eines Informationsträgers an der ordnungsgemäßen Kontaktierungsposition in einfacher Art und Weise erkannt. Ferner wird auch bei einer Positionierung mit größeren Freiheitsgraden in der Beweglichkeit des Informationsträgers eine zuverlässige Detektierung der ordnungsgemäßen Kontaktierungsposition ermöglicht.

Vorteilhaft ist bei der Ausgestaltung nach Anspruch 2, daß der kartenförmige Informationsträger mit einem seiner Eckbereiche voran, mühelos in den schlitzförmigen Durchbruch im Gehäuse bzw. im Aufnahmekörper eingeschoben werden kann, und in seiner endanschlagbegrenzten Stellung die ordnungsgemäße Kontaktierungsposition vorliegt. Das Zuführen eines Informationsträgers zur Kontaktiereinrichtung ist also besonders einfach zu bewerkstelligen.

Die Ausbildung nach Anspruch 3 begünstigt eine taktile Erkennung der ordnungsgemäßen Kontaktierungsposition, da der kartenförmige Informationsträger in allen quer zu seiner Längsrichtung verlaufenden Richtungen eindeutig positioniert wird.

Die Weiterbildungen gemäß Anspruch 4 gestatten entweder eine ausschließlich lineare Zuführbewegung des Informationsträgers oder aber eine kombinierte, lineare und rotatorische Zuführbewegung zur Einnahme der ordnungsgemäßen Kontaktierungsposition.

Die mögliche Weiterbildung gemäß Anspruch 5 ermöglicht eine definierte, zwangsgeführte Verschwenkung des Informationsträgers relativ zur Kontaktiereinrichtung, so daß das Auffinden der Kontaktierungsposition nochmals erleichtert wird.

Eine einfache Halterung bzw. Aufnahme des eingeführten Informationsträgers in der Kontaktiereinrichtung sowie eine einfache, gegenseitige Positionierung wird durch die Ausgestaltung nach Anspruch 6 erzielt.

Durch die Maßnahmen gemäß Anspruch 7 oder 8 wird einerseits ein besonders schlanker bzw. schmaler Aufbau der Kontaktiereinrichtung ermöglicht und darüber hinaus die Auffindung der ordnungsgemäßen Kontaktierungsposition zwischen der Kontaktiereinrichtung und einem entsprechenden Informationsträger erleichtert. Das Einführen des Informationsträgers in den Durchbruch der Kontaktiereinrichtung wird dabei durch die vergleichsweise große Einführöffnung erleichtert.

Durch die Ausbildung nach Anspruch 9 wird mit Vorteil ausgenutzt, daß sobald der Winkelanschlag die definierte Drehwinkelstellung eingenommen hat, dies ein Anzeichen dafür ist, daß der zugeführte Informationsträger die vorgesehene Kontaktierungsposition eingenommen hat.

Ein besonders kompakter und handlicher Aufbau einer Kontaktiereinrichtung, welche die uneingeschränkte Bearbeitung (Lesen und/oder Schreiben) relativ großer kartenförmiger Informationsträger im Format einer standardisierten Smart-Card bzw. Chipkarte ermöglicht, ist durch die Maßnahmen nach Anspruch 10 erzielbar. Insbesondere können dadurch die relativ großen, allgemein gebräuchlichen Smart-Cards bzw. Chipkarten mühelos dieser vergleichsweise kompakt aufbauenden Kontaktiereinrichtung zugeführt werden.

Durch die Ausgestaltung nach Anspruch 11 wird einerseits stets ein definierter Konfigurationszustand der Kontaktiereinrichtung sichergestellt bzw. ein raumsparender und vor Beschädigungen oder Brüchen sicherer Ausgangszustand hergestellt.

Durch die Weiterbildung nach Anspruch 12 kann die Funktionalität der Kontaktiereinrichtung nochmals gesteigert werden und kann durch dessen Multifunktionalität die Bereitschaft zum nahezu ständigen Beisichtragen der Kontaktiereinrichtung nochmals erhöht werden.

Eine praktikable Weiterbildung der Kontaktiereinrichtung ist im Anspruch 13 oder 14 angegeben.

Eine sichere Positionierung und Halterung eines Informationsträgers quer zu seiner Längsrichtung wird durch die Ausgestaltung nach Anspruch 15 mit einfachen Maßnahmen wirkungsvoll erzielt.

Durch die Ausgestaltung nach Anspruch 16 können auch geringfügig verformte oder in ihrer Stärke bzw. Dicke uneinheitliche Informationsträger problemlos verarbeitet werden.

Durch die Ausgestaltung nach Anspruch 17 wird automatisch mit der Zuführbewegung eines entsprechenden Informationsträgers eine Ausschwenkbewegung des verstellbaren Anschlagelementes bewirkt, so daß eine separate manuelle Verstellung in seine Aktivposition erübrigt ist.

Durch die Ausgestaltung nach Anspruch 18 oder 19 kann der Winkelanschlag relativ großzügig dimensioniert werden, wodurch dessen Positioniergenauigkeit für den Informationsträger relativ hoch ausfallen kann.

Durch die Ausgestaltung nach Anspruch 20 können im Datenspeicherelement eines Informationsträgers hinterlegte Daten ausgelesen und/oder unsichtbar im Datenspeicherelement hinterlegt werden.

Die vorteilhafte Ausgestaltung gemäß Anspruch 21 kann den manuellen Positioniervorgang eines Informationsträgers gegenüber der Kontaktiereinrichtung deutlich erleichtern.

Eine eigenständige Lösung einer der Aufgaben der Erfindung ist durch die Ausbildung gemäß Anspruch 22 gegeben.

Die sich aus der Merkmalskombination dieses Anspruches ergebenden Vorteile liegen darin, daß durch die angegebene Kontaktiereinrichtung eine robuste und kompakte, elektronische Leseeinheit geschaffen werden kann, die für den alltäglichen Gebrauch bestens geeignet ist und eine langfristige Funktionstauglichkeit gewährleisten kann.

Durch die Ausgestaltung nach Anspruch 23 wird trotz des kompakten Aufbaus ein gutes Handling der Leseeinheit sichergestellt.

Durch die Weiterbildung nach Anspruch 24 wird eine praktikable elektronische Leseeinheit geschaffen, da damit auch manuelle Schreibtätigkeiten vorgenommen werden können.

Durch die Ausgestaltung nach Anspruch 25 können relevante Daten bzw. Betriebszustände direkt am Gehäuse der Leseeinheit ausgegeben und visuell erfaßt werden.

Durch die Weiterbildung nach Anspruch 26 ist ein einfacher Datenaustausch bzw. Datenabgleich mit einer stationären Recheneinheit ermöglicht.

Zufolge der Ausgestaltung nach Anspruch 27 können standardisierte Schnittstellen für eine nahezu uneingeschränkte Anbindung an eine Vielzahl von Systemen bzw. gebräuchlicher Recheneinheiten genutzt werden. Darüber hinaus ist eine benötigte Kommunikationsverbindung besonders problemlos und komfortabel herstellbar.

Durch die Ausgestaltung nach Anspruch 28 oder 29 ist auch während einer aktiven Datenübertragung eine uneingeschränkte Mobilität innerhalb der maximalen Reichweite der Funkübertragung ermöglicht. Zudem ist der manuelle Aufwand zur Herstellung der Datenübertragungsverbindung überaus gering und sind keine zusätzlichen Mittel, wie beispielsweise Kabelverbindungen, zum Aufbau der Übertragungsstrecke erforderlich.

Durch die Ausgestaltung nach Anspruch 30 oder 31 kann das Betriebsverhalten der Leseeinheit den jeweiligen Erfordernissen in einfacher Art und Weise angepaßt werden bzw. kann dadurch gezielt aus den zur Verfügung stehenden Funktionalitäten ausgewählt bzw. der interessierende Datensatz abgerufen werden.

Durch die mögliche Weiterbildung nach Anspruch 32 kann in einfacher Art und Weise eine personalisierte Leseeinheit geschaffen werden, welche nur durch Kenntnis des entsprechenden Freischalt-Codes genutzt werden kann.

Die Nützlichkeit der elektronischen Leseeinheit kann durch die Weiterbildung nach Anspruch 33 weiter gesteigert werden.

Durch die vorteilhafte Weiterbildung nach Anspruch 34 wird eine Grundlage für eine gesicherte Aufbewahrung der Leseeinheit in Taschen des Benutzers geschaffen.

Die Weiterbildung nach Anspruch 35 oder 36 ermöglicht in Anlehnung an übliche, mechanische Betätigungs- bzw. Funktionselemente eines Kugelschreibers, eine effektvolle Bedienung der Leseeinheit.

Durch die vorteilhafte Weiterbildung nach einem oder mehreren der Ansprüche 37 bis 39 kann eine zuverlässige Prüfung der Nutzungsberechtigung der Leseeinheit bzw. eine Absicherung der mit der Leseeinheit abrufbaren Funktionen bzw. ausführbaren Aktionen gegenüber unbefugten Personen erfolgen.

Durch die mögliche Ausgestaltung nach Anspruch 40 oder 41 kann gleichfalls eine Überprüfung der Nutzungsberechtigung bzw. eine Überprüfung der Identität des Benutzers der Leseeinheit vorgenommen werden.

Durch die vorteilhafte Weiterbildung nach Anspruch 42 kann das Vorhandensein des Informationsträgers zuverlässig detektiert werden und der Energieverbrauch der Leseeinheit im Stand-by-Betrieb minimiert werden.

Ein unabhängiger, kabelloser Betrieb der Leseeinheit ist durch die Ausgestaltung nach Anspruch 43 gewährleistet.

Durch die Ausgestaltung nach Anspruch 44 oder 45 wird eine Kombination zwischen stationärer Haltevorrichtung und Aufladevorrichtung für die Leseeinheit erzielt, wodurch die Gefahr des Verlegens der Leseeinheit minimiert wird und eine stets betriebsbereite Leseeinheit zufolge ausreichend aufgeladener Akkumulatoren erzielt wird.

Durch die Ausgestaltung nach Anspruch 46 kann in einfacher Art und Weise eine Aufnahme bzw. Halterung für die Leseeinheit geschaffen werden, über welche in einfacher Art und Weise auch eine Kommunikationsverbindung zu einer übergeordneten Recheneinheit aufbaubar ist.

Durch die Ausgestaltung nach Anspruch 47 können unterschiedlich aktuelle Datenbestände zwischen der Leseeinheit bzw. dessen Informationsträger und der übergeordneten Recheneinheit in einfacher Art und Weise abgeglichen bzw. auf den letztgültigen Stand gebracht werden.

Im nachfolgenden werden in den Zeichnungen dargestellte Ausführungsbeispiele näher erläutert.

Es zeigen:
- Fig. 1: eine Ausgestaltung der Kontaktiereinrichtung mit einem dazu schräggestellt zuzuführenden, kartenförmigen Informationsträger in Draufsicht und vereinfachter Darstellung;
- Fig. 2: die Kontaktiereinrichtung gemäß Fig. 2 mit einem bis zu den Anschlagelementen eingeschobenen und sich in Kontaktposition befindlichen, kartenförmigen Informationsträger;
- Fig. 3: ein schematisiert dargestelltes Anwendungsbeispiel der Kontaktiereinrichtung für kartenförmige Informationsträger;
- Fig. 4: die Kontaktiereinrichtung als Leseeinheit für kartenförmige Informationsträger mit einer anderen Ausführungsform von starren Anschlagelementen, in vereinfachter, schematischer Draufsicht;
- Fig. 5: eine andere Ausführungsform der als Schreibutensil ausgebildeten Leseeinheit mit einer weiteren Ausgestaltung der starren Anschlagelemente, in vereinfachter, schematischer Draufsicht;
- Fig. 6: eine weitere Ausführung der Leseeinheit mit einem im schlitzförmigen Durchbruch zur Aufnahme des Informationsträgers verschwenkbar gelagerten Winkelanschlag und einer feststehenden Anschlagkante in Draufsicht und vereinfachter, schematischer Darstellung;
- Fig. 7: eine weitere Ausführungsform für vergleichsweise kleinformatige oder großformatige kartenförmige Informationsträger in vereinfachter, schematischer Draufsicht;
- Fig. 8: eine weitere Ausführungsform der Kontaktiereinrichtung bzw. Leseeinheit mit einer dieser zugeordneten Basisstation, welche mit einer übergeordneten Recheneinheit verbindbar ist, in vereinfachter, schematischer Darstellung.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

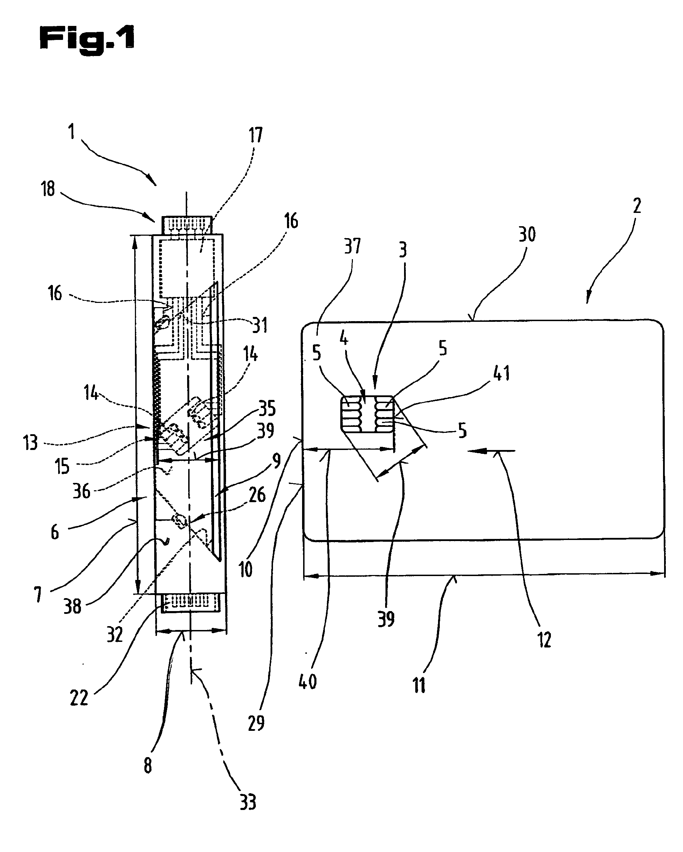

In den Fig. 1 bis 3 ist eine Ausführungsform der erfindungsgemäßen Kontaktiereinrichtung 1 bzw. Leseeinheit für kartenförmige Informationsträger 2 veranschaulicht. Diese Kontaktiereinrichtung 1 ist dabei durch ein kompaktes elektronisches Modul bzw. Gerät gebildet, mit welchem übliche Informationsträger 2 in Form von kartenförmigen Datenträgern verarbeitet, d.h. zumindest gelesen oder aber auch mit entsprechenden Daten beschrieben werden können. Unter Informationsträger 2 sind bevorzugt standardisierte Datenkarten bzw. sogenannte "Smart-Cards" mit darauf angeordnetem bzw. integriertem elektronischen Chip 3 zu verstehen. Dieser elektronische Chip 3 bzw. der dementsprechende Elektronikschaltkreis umfaßt einen Mikrorechner und einen diesem Mikrorechner zugeordneten, elektronischen Datenspeicher. Derartige Informationsträger 2 mit einem elektronischen Chip 3 werden auch als intelligente Datenkarten bzw. Datenträger bezeichnet, da mittels dem Mikrorechner und dem Datenspeicherelement Rechen- bzw. Vergleichsoperationen ausgeführt werden können. Hierfür umfaßt der Chip 3 bevorzugt einen programmgesteuerten Mikrorechner, welcher entsprechend den Vorgaben im auszuführenden Softwareprogramm arbeitet.

Im dargestellten Ausführungsbeispiel gemäß den Fig. 1 bis 3 ist eine tragbare, kompakte Kontaktiereinrichtung 1 bzw. Leseeinheit zur Verarbeitung von Informationsträgern 2 bzw. Kartenkörpem aus Kunststoff mit Abmessungen von in etwa 85 mm mal in etwa 54 mm bzw. entsprechend den standardisierten Dimensionen sogenannter Chipkarten, schematisch veranschaulicht.

Im Datenspeicherelement des Chip 3 sind im Vergleich zu herkömmlichen Magnetkarten jedenfalls relativ große Datenmengen hinterlegbar. Zudem kann durch die rechnerbedingte "Intelligenz" der Chipkarte hohen Sicherheitsanforderungen Rechnung getragen werden.

Damit der elektronische Chip 3 des Informationsträgers 2 mit peripheren elektronischen Einheiten in Verbindung treten kann, ist - wie an sich bekannt - an wenigstens einer Flachseite des Informationsträgers 2 ein Kontaktfeld 4 ausgebildet. Dieses Kontaktfeld 4 umfaßt mehrere, insbesondere wenigstens zwei, üblicherweise aber sechs oder acht Kontaktierungsflächen 5, welche als elektrische Schnittstelle zu peripheren Einheiten des Chips 3 dienen.

Neben den sogenannten Chipkarten oder SIM-Karten bzw. den kartenförmigen Informationsträgern 2 wie sie in ISO 7816/1 definiert sind, ist es selbstverständlich auch möglich, die Kontaktiereinrichtung 1 bzw. die nachfolgend beschriebene Leseeinheit für sonstige digitale Speicherkarten auszulegen. So ist es zum Beispiel auch möglich, als kartenförmige Informationsträger 2 sogenannte Smart-Media Cards (SMC), Compact Flash Cards (CF), Multi Media Cards (MMC) oder sogenannte Memory-Sticks einzusetzen und die Kontaktiereinrichtung 1 bzw. die Leseeinheit für die jeweilige kontaktbehaftete Schnittstelle zu dimensionieren. Die Kontaktiereinrichtung 1 bzw. Leseeinheit besteht u.a. aus einem länglichen bzw. stabförmigen Gehäuse oder Aufnahmekörper 6 als Träger für die nachfolgend noch beschriebene Kontaktvorrichtung und als Haltemittel für einen einzuführenden Informationsträger 2. Eine Länge 7 dieses bevorzugt aus Kunststoff gebildeten Aufnahmekörpers 6 beträgt ein Mehrfaches einer Breite 8 des Gehäuses bzw. Aufnahmekörpers 6. Eine Breite 8 des Aufnahmekörpers 6 kann beispielsweise lediglich in etwa 15 mm bis 25 mm betragen und die Länge des stift- bzw. stabförmigen Aufnahmekörpers 6 beträgt in der Regel mehr als etwa 70 mm.

Im Gehäuse oder Aufnahmekörper 6 ist wenigstens eine Einführöffnung 9 zum bedarfsweisen Einschieben bzw. Einstecken eines kartenförmigen Informationsträgers 2 ausgebildet. Die Einführöffnung 9 ist bevorzugt schlitzförmig ausgebildet und derart dimensioniert, daß eine Stirnseite bzw. eine Breitseite 10 des Informationsträgers 2 zumindest teilweise in die schlitzförmige Einführöffnung 9 bzw. in den Aufnahmekörper 6 eingesteckt werden kann. Die Breiten- und Höhenabmessungen der schlitzförmigen Einführöffnung 9 sind demnach annähernd gleich oder geringfügig größer als die stirnseitigen Abmessungen des kartenförmigen Informationsträgers 2 an dessen Breitseite 10. Somit weist die Einführöffnung 9 eine Breite von in etwa 55 mm und eine der Kartendicke entsprechende Höhe von mehr als etwa 1 mm auf.

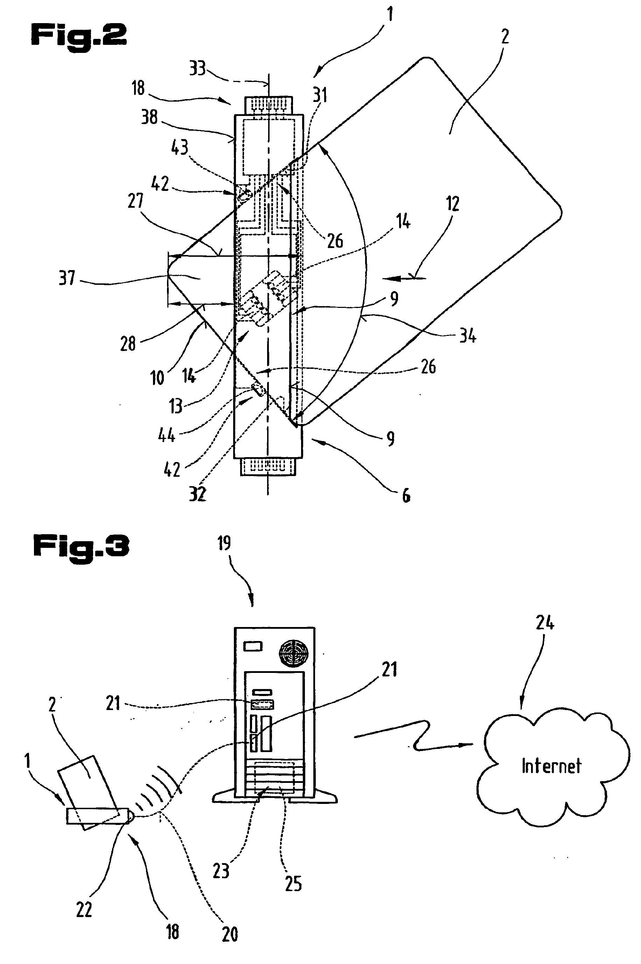

Vorteilhafterweise verläuft eine Längserstreckung 11 eines der Kontaktiereinrichtung 1 bzw. Leseeinheit zugeführten Informationsträgers 2 winkelig zur Längserstreckung bzw. Länge 7 des Aufnahmekörpers 6. D.h. eine Zuführrichtung - gemäß Pfeil 12 - des kartenförmigen Informationsträgers 2 kann in etwa querverlaufend zur Länge 7 des Aufnahmekörpers 6 vorgesehen sein - in der kontaktierenden Endlage ist die Längsachse des Informationsträgers 2 dann jedenfalls schräg zum länglichen Gehäuse oder Aufnahmekörper 6 ausgerichtet, wie dies aus Fig. 2 deutlich ersichtlich ist.

Damit die handliche Leseeinheit mit dem Chip 3 des Informationsträgers 2 in Kommunikationsverbindung treten kann, ist in der Einführöffnung 9 des Aufnahmekörpers 6 eine Kontaktvorrichtung 13 angeordnet. Diese Kontaktvorrichtung 13 besteht aus einer Mehrzahl von block- bzw. matrixartig angeordneten Kontaktelementen 14. Diese Kontaktelemente 14 sind üblicherweise durch eine Mehrzahl federelastisch gelagerter bzw. federelastisch nachgiebiger Kontaktfahnen gebildet, wobei die Kontaktvorrichtung 13 auch als standardmäßig verfügbarer, vorgefertigter Kontaktblock ausgeführt sein kann. Die Kontaktvorrichtung 13 umfaßt wenigstens zwei, üblicherweise sechs oder acht Kontaktelemente 14, welche derart positioniert sind, daß diese mit den jeweiligen Kontaktierungsflächen 5 eines zu verarbeitenden Informationsträgers 2 in elektrische Kontaktverbindung treten können. Die Kontaktvorrichtung 13 stellt also eine kontaktbehaftete Schnittstelle 15 zum Chip 3 eines zu verarbeitenden Informationsträgers 2 dar.

Gemäß einer vorteilhaften Weiterbildung der Kontaktiereinrichtung 1 ist die kontaktbehaftete Schnittstelle 15 bzw. deren Kontaktvorrichtung 13 über mehrere Leitungen 16 mit einem innerhalb des Gehäuses bzw. Aufnahmekörpers 6 angeordneten, elektronischen Schaltkreis 17 verbunden. Dieser Schaltkreis 17 kann dabei durch einen Mikrorechner oder durch eine fix programmierte Gatteranordnung mit interner Logik gebildet sein. Bevorzugt ist dieser elektronische Schaltkreis 17 vom Gehäuse bzw. Aufnahmekörper 6 allseitig umgeben bzw. in diesem integriert oder eingespritzt, um vor äußeren Einflüssen bestmöglich geschützt zu sein. Der Schaltkreis 17 kann dabei eine programmierte Intelligenz aufweisen und selbst bestimmte Rechenoperationen und/oder kryptographische Verschlüsselungen und/oder Prüfaufgaben ausführen, oder aber auch als einfache Interfacelogik mit vorgegebenen Schaltzustandsabläufen in Art einer "State-Machine" ausgeführt sein.

Bevorzugt umfaßt die elektronische Kontaktiereinrichtung 1 bzw. die entsprechende Leseeinheit neben der ersten, kontaktbehafteten Schnittstelle 15 zum Chip 3 eines Informationsträgers 2 weiters zumindest eine weitere Schnittstelle 18. Diese Schnittstelle 18 kann dabei als drahtgebundene oder auch als drahtlose Schnittstelle 18 ausgebildet sein, wie dies in Fig. 3 veranschaulicht ist. Über diese externe, drahtlose Schnittstelle 18 ist die Kontaktiereinrichtung 1 mit einer übergeordneten Recheneinheit 19, wie z.B. einem Personal Computer, einem Laptop oder einer sonstigen Recheneinheit für allgemeine Verwendungszwecke, verbindbar.

Zusätzlich oder alternativ zur drahtlosen Schnittstelle 18 ist es selbstverständlich auch möglich, die Schnittstelle 18 als drahtgebundenes Interface auszubilden. Dabei ist ein Kabel 20 vorzusehen, über welches die Schnittstelle 18 der Leseeinheit mit einer geeigneten, kontaktbehafteten Schnittstelle 21 einer Recheneinheit 19 verbindbar ist. Die Schnittstelle 21 der Recheneinheit 19 kann beispielsweise durch eine serielle Schnittstelle (RS232) oder eine parallele Schnittstelle gebildet sein.

Idealerweise ist die Schnittstelle 18 der Kontaktiereinrichtung 1 bzw. der entsprechenden Leseeinheit durch eine Steckverbindungsvorrichtung 22 zur Ankopplung derselben an eine USB-(Universal Serial Bus) Schnittstelle der Recheneinheit 19 gebildet. Die Steckverbindungsvorrichtung 22 an der Kontaktiereinrichtung 1 bzw. der Leseeinheit kann dabei zur direkten Ankopplung bzw. zum direkten Einstecken derselben an eine das USB-Protokoll unterstützende Schnittstelle 21 der Recheneinheit 19 ausgebildet sein und/oder mittels einem USBfähigen Kabel 20 an die Recheneinheit 16 anschließbar sein.

Sofern die Schnittstelle 18 der Kontaktiereinrichtung 1 bzw. Leseeinheit als drahtlose Datenschnittstelle ausgebildet ist, können Signale bzw. Daten zwischen der Kontaktiereinrichtung 1 bzw. der Leseeinheit und der übergeordneten Rechnereinheit 19 draht- bzw. kabellos übertragen werden. Eine derartige Schnittstelle 18 der Kontaktiereinrichtung 1 bzw. der Leseeinheit kann dabei zur Aussendung und/oder zum Empfang optischer Signale, insbesondere von Infrarot-Signalen, ausgebildet sein. Gemäß einer verbesserten Ausführungsform ist die drahtlose Schnittstelle 18 durch wenigstens eine Antenne zur Übertragung und/oder zum Empfang elektromagnetischer Wellen ausgebildet. In diesem Fall ist der Antenne eine Modulator- und/oder eine Demodulator-Schaltung vor- bzw. nachgeordnet. Idealerweise ist die drahtlose Schnittstelle 18 durch eine standardisierte Schnittstelle zur Funkdatenübertragung, beispielsweise durch eine sogenannte Bluetooth-Schnittstelle, gebildet. Vorteilhaft ist dabei, daß diese Technologie die problemlose Anbindung an eine Vielzahl von Recheneinheiten 19, wie z.B. Personal-Computer, Handheld-Computer, Organizer, Mobiltelefone oder sonstige elektronische Geräte erlaubt, nachdem keine Verkabelung erforderlich ist, um die Kommunikationsverbindung zur Kontaktiereinrichtung 1 bzw. zu der diese umfassenden Leseeinheit aufbauen zu können.

Anstelle eines Personal-Computers als Recheneinheit 19 ist die erfindungsgemäße Kontaktiereinrichtung 1 bzw. Leseeinheit selbstverständlich auch an jede andere Recheneinheit 19, beispielsweise an einen Laptop, eine Workstation, ein Mobiltelefon, einen mobilen Organizer bzw. einen sonstigen Handheld-PC anbindbar, sofern diese elektronische Recheneinheit 19 über die jeweiligen Spezifikationen zur Verbindung mit der Kontaktiereinrichtung 1 bzw. Leseeinheit verfügt.

Im Regelfall ist die Recheneinheit 19 über wenigstens ein Kommunikationsmittel 23 mit einem globalen Kommunikationsnetzwerk 24, beispielsweise mit dem sogenannten Internet, verbindbar. Das Kommunikationsmittel 23 kann dabei zur Übertragung von Daten und/oder Audio- und/ oder Videosignalen vorgesehen und beispielsweise durch ein sogenanntes Modem 25 gebildet sein. Das Modem 25 kann dabei zur drahtgebundenen und/oder drahtlosen Fernübertragung sowie zum Empfangen von Daten bzw. Signalen via dem Kommunikationsnetzwerk 24 ausgebildet sein. Die Recheneinheit 19 umfaßt bevorzugt wenigstens eine nicht dargestellte Eingabevorrichtung, beispielsweise eine Tastatur oder ein Touch-Pad und eine der Einfachheit halber nicht dargestellte Ausgabevorrichtung, z.B. einen Monitor oder ein Display.

Ein im Gehäuse oder Aufnahmekörper 6 angeordneter Schaltkreis 17 ist einerseits mit der Kontaktvorrichtung 13 und andererseits mit einer drahtlosen und/oder drahtgebundenen Schnittstelle 18 zu einer übergeordneten Recheneinheit 19 verbunden. Der Schaltkreis 17 stellt insbesondere eine Interfacelogik dar, welche mit der kartenseitigen, kontaktbehafteten Schnittstelle 15 sowie mit der rechnerseitigen Schnittstelle 18 elektrisch verbunden ist und wenigstens als Interpreter zwischen einem für die erste Schnittstelle 15 gültigen Kommunikationsprotokoll und einem dazu unterschiedlichen Kommunikationsprotokoll für die zweite Schnittstelle 18 dient. Der Schaltkreis 17 ist also wenigstens dazu vorgesehen, die Kompatibilität bzw. Verträglichkeit der ersten Schnittstelle 15 zu einem Informationsträger 2 gegenüber der zweiten Schnittstelle 18 zu einer übergeordneten Recheneinheit 19 und umgekehrt herzustellen.

Die Einführöffnung 9 ist bevorzugt als sich durch das Gehäuse bzw. den Aufnahmekörper 6 erstreckende Ausnehmung ausgebildet. D.h. eine Länge bzw. Tiefe der schlitzförmigen Einführöffnung 9 für den kartenförmigen Informationsträger 2 erstreckt sich durchgehend über die gesamte Breite 8 der Kontaktiereinrichtung 1 bzw. Leseeinheit, so daß die Einführöffnung 9 als Durchgangsschlitz durch das Gehäuse bzw. den Aufnahmekörper 6 bezeichnet werden kann. Ein zu verarbeitender Informationsträger 2 ist also durch die Kontaktiereinrichtung 1 bzw. Leseeinheit bzw. den Aufnahmekörper 6 hindurchsteckbar und ragt somit im Betriebs- bzw. Einsatzzustand gemäß Fig. 2 durch die Kontaktiereinrichtung 1 bzw. Leseeinheit bzw. den Aufnahmekörper 6 hindurch. Insbesondere durchquert ein zu bearbeitender, kartenförmiger Informationsträger 2 das Gehäuse bzw. den Aufnahmekörper 6 der Kontaktiereinrichtung 1 bzw. Leseeinheit quer zu dessen Länge 7.

Um den kartenförmigen Informationsträger 2 mit dessen elektrischen Kontaktierungsflächen 5 in bezug zur Kontaktvorrichtung 13 der Kontaktiereinrichtung 1 exakt und mühelos positionieren zu können, ist am Gehäuse oder Aufnahmekörper 6 wenigstens ein Anschlagelement 26 ausgebildet. Dieses Anschlagelement 26 begrenzt die Einschubtiefe des kartenförmigen Informationsträgers 2 relativ zur Einführöffnung 9 bzw. relativ zur Kontaktvorrichtung 13. Insbesondere limitiert das Anschlagelement 26 eine Durchsteckweite 27 für den Informationsträger 2 ausgehend vom Einführbereich der schlitzförmigen Einführöffnung 9. Das wenigstens eine Anschlagelement 26 begrenzt also einen Überstand 28 des kartenförmigen Informationsträgers 2 gegenüber einem auf die Zuführrichtung - Pfeil 12 - bezogenen Austrittsbereich des Informationsträgers 2 aus der schlitzförmigen Einführöffnung 9.

Das Gehäuse oder der Aufnahmekörper 6 weist also wenigstens ein Anschlagelement 26 für wenigstens einen Kantenbereich 29, 30 eines zur Zufuhr vorgesehenen Informationsträgers 2 auf. Diese, bevorzugt rechtwinkelig zueinander ausgerichteten Anschlagelemente 26 des Gehäuses oder Aufnahmekörpers 6 der Leseeinheit, sind vorgesehen, um die Kontaktierungsflächen 5 eines zuzuführenden Informationsträgers 2 gegenüber den Kontaktelementen 14 der Leseeinheit bzw. der Kontaktiereinrichtung 1 exakt und mühelos positionieren zu können.

Wie aus den Darstellungen weiters eindeutig zu entnehmen ist, ist eine Länge 7 des Gehäuses oder Aufnahmekörpers 6 größer bemessen, als eine Breitseite 10 eines zuführbaren, kartenförmigen Informationsträgers 2 im Format einer standardisierten Smart-Card, welche den kartenförmigen Informationsträger 2 darstellen kann.

Wesentlich ist, daß Anschlagkanten 31, 32 des wenigstens einen Anschlagelementes 26 oder Anschlagkanten 31, 32 zweier Anschlagelemente 26 schräg bzw. geneigt zu einer Längsmittelachse 33 des Gehäuses oder Aufnahmekörpers 6 verlaufen. D.h. die Anschlagkanten 31, 32 des bzw. der gehäuseseitigen Anschlagelemente 26 verlaufen nicht rechtwinkelig oder nicht parallel zur Längsmittelachse 33 des Gehäuses oder Aufnahmekörpers 6.

Wenigstens zwei der am Gehäuse oder Aufnahmekörper 6 ausgebildeten Anschlagkanten 31, 32 sind in einem annähernd rechten Winkel 34 zueinander ausgerichtet bzw. schließen diese Anschlagkanten 31, 32 einen annähernd rechten Winkel 34 ein. Insbesondere sind zwei im Gehäuse oder Aufnahmekörper 6 zueinander distanzierte Anschlagkanten 31, 32 annähernd rechtwinkelig zueinander ausgerichtet, um als Begrenzungsanschläge für zwei im rechten Winkel zueinander verlaufenden Kantenbereiche 29, 30 eines zuzuführenden Informationsträgers 2 fungieren zu können.

Eine Distanz zwischen den Anschlagkanten 31, 32 bzw. zwischen den Anschlagelementen 26 ist dabei derart gewählt, daß wenigstens eine der schräg gestellten Anschlagkanten 31, 32 eine Zuführbewegung eines Informationsträgers 2 in Querrichtung zum Gehäuse oder Aufnahmekörper 6 begrenzt. D.h. ein entsprechender kartenförmiger Informationsträger 2 kann mittels den schräg gestellten Anschlagelementen 26 nicht zur Gänze durch das Gehäuse oder den Aufnahmekörper 6 geschoben werden, sondern ist dessen Zuführbewegung in Zuführrichtung, gemäß Pfeil 12, anschlagbegrenzt.

Gemäß einer vorteilhaften Ausführung sind die Anschlagelemente 26 bzw. die Anschlagkanten 31, 32 durch starre bzw. unbewegliche Kanten bzw. Fortsätze oder sonstige Elemente des Gehäuses oder Aufnahmekörpers 6 gebildet. Insbesondere wenn die Einführöffnung 9 für den Informationsträger 2 als sich in Zuführrichtung - gemäß Pfeil 12 - verjüngender Durchbruch 35 durch das Gehäuse oder den Aufnahmekörper 6 ausgebildet ist, so sind die Anschlagkanten 31, 32 bevorzugt durch die den Durchbruch 35 begrenzenden Wandungen gebildet, wie dies aus den Fig. 1 und 2 deutlich ersichtlich ist. Dieser Durchbruch 35 durch das Gehäuse oder den Aufnahmekörper 6 bildet bevorzugt eine Auflageebene 36 für wenigstens eine Flachseite des Informationsträgers 2 und wenigstens eine der Anschlagkanten 31, 32 zur ordnungsgemäßen Positionierung eines zur Kontaktierung vorgesehen Informationsträgers 2 aus.

Anstelle der Ausbildung geradliniger, relativ weitreichender Anschlagkanten 31, 32 können diese selbstverständlich auch durch mehrere einzelne, beispielsweise abgerundete, Anschlagfortsätze bzw. Positionierzapfen gebildet sein.

Insbesondere soll sich der Durchbruch 35 im Gehäuse oder Aufnahmekörper 6 ausgehend vom Zuführbereich für den Informationsträger 2 in Richtung zum gegenüberliegenden Austrittsbereich für den Informationsträger 2 aus dem Gehäuse oder Aufnahmekörper 6 verjüngen. Somit ist ein Öffnungsquerschnitt des Durchbruches 35 im Austrittsbereich kleiner bemessen als ein Öffnungsquerschnitt des Durchbruches 35 im Zuführbereich für einen kartenförmigen Informationsträger 2.

Wesentlich ist weiters, daß die Kontaktvorrichtung 13 der Kontaktiereinrichtung 1 bzw. der Leseeinheit in Draufsicht auf ihre Kontaktelemente 14 gegenüber der Längsmittelachse 33 ebenso in entsprechendem Ausmaß schräg gestellt ist. Dadurch wird erreicht, daß die Kontaktelemente 14 bei entsprechend den Vorgaben der Anschlagelemente 26 schiefwinkelig positioniertem bzw. schräg eingeführtem Informationsträger 2 mit den jeweils vorgesehenen Kontaktierungsflächen 5 im Kontaktfeld 4 des kartenförmigen Informationsträgers 2 ordnungsgemäß kontaktieren können. D.h. die Schrägstellung bzw. schiefwinkelige Ausrichtung der Kontaktelemente 14 ist derart gewählt, daß eine ordnungsgemäße Kontaktierung erfolgt und zwischen den einzelnen Kontaktierungsflächen 5 des Informationsträgers 2 keine Kurzschlüsse und auch keine Fehlkontaktierungen auftreten.

Anstelle der Schrägstellung des gesamten Kontaktblockes bzw. der gesamten Kontaktiervorrichtung 13 gegenüber der Längsmittelachse 33 ist es selbstverständlich auch möglich, kdiglich deren einzelne Kontaktelemente 14 derart zu positionieren, daß diese bei entsprechend schiefwinkelig eingesetzten Informationsträger 2 zuverlässig und ordnungsgemäß mit dessen Kontaktierungsflächen 5 kontaktieren können. Die einzelnen Kontaktelemente 14 können hierfür unterschiedliche Längen und/oder Abwinkelungen aufweisen, um mit der jeweiligen Kontaktierungsfläche 5 eines zugeführten Informationsträgers 2 ordnungsgemäß kontaktieren zu können.

Die Dimensionen der Kontaktiereinrichtung 1 und die Anschlagelemente 26 oder Anschlagkanten 31, 32 im Durchbruch 35 des Gehäuses oder Aufnahmekörpers 6 sind derart plaziert und ausgerichtet, daß ein auf die Zuführrichtung - Pfeil 12 - bezogener, vorderer Eckbereich 37 eines kontaktierend plazierten Informationsträgers 2 über eine Außenumgrenzung bzw. Mantelfläche 38 des Gehäuses oder Aufnahmekörpers 6 vorragt. D.h. im ordnungsgemäß plazierten bzw. eingesetzten Zustand eines Informationsträgers 2 steht der auf die Zuführrichtung - Pfeil 12 - bezogene vordere Eckbereiche 37 des Informationsträgers 2 gegenüber dem Gehäuse bzw. dem Aufnahmekörper 6 hervor. Bei der Ausbildung eines Durchbruches 35 im Gehäuse oder Aufnahmekörpers 6 ragt also der auf die Zuführrichtung - gemäß Pfeil 12 - vordere Eckbereich 37 des kartenförmigen Informationsträgers 37 aus dem schlitzförmigen Durchbruch 35 heraus. Bevorzugt ragt jener Eckbereich 37 des kartenförmigen Informationsträgers 2 vor, welcher vergleichsweise am nächsten zum Chip 3 bzw. zu dessen Kontaktfeld 4 liegt.

Alternativ ist es selbstverständlich auch möglich, den hierzu benachbarten Eckbereich an der gleichen Breitseite 10 des kartenförmigen Informationsträgers 2 als Einfüluecke bzw. Einführspitze in das Gehäuse oder den Aufnahmekörper 6 heranzuziehen. Diese würde aber etwas weitläufiger zueinander distanzierte Anschlagelemente 26 bzw. Anschlagkanten 31, 32 oder einen breiteren Aufnahmekörper 6 erfordern.

Durch die Anschlagelemente 26 ist es möglich, daß eine auf eine Zuführrichtung - Pfeil 12 - eines Informationsträgers 2 bezogene Breite 8 des Gehäuses oder des Aufnahmekörpers 6 nur in etwa einer in gleicher Richtung gemessenen Erstreckung 39 der Kontaktvorrichtung 13 oder der feldförmigen Kontaktierungsflächen 5 entspricht. Wesentlich ist, daß durch die Anordnung und Ausrichtung der Anschlagelemente 26 eine Breite 8 des Gehäuses bzw. Aufnahmekörpers 6 kleiner bemessen sein kann, als ein Abstand 40 zwischen dem linken Rand bzw. einer zum Chip 3 nächstliegenden Breitseite 10 des Informationsträgers 2 und einer davon abgewandten, rechten Begrenzung 41 des Kontaktfeldes 4 des Chip 3.

In der ordnungsgemäßen Kontaktierungsposition des kartenförmigen Informationsträgers 2 durchdringt dieser dann das Gehäuse oder den Aufnahmekörper 6 und stehen dabei bevorzugt zumindest drei Ecken des rechteckigen, kartenförmigen Informationsträgers 2 vom Gehäuse oder Aufnahmekörper 6 ab.

Durch die zuvor erwähnten Mittel bzw. Baumaßnahmen lassen sich besonders kompakte Leseeinheiten bzw. Kontaktiereinrichtungen 1 schaffen, welche aufgrund ihrer geringen Abmessungen einfach eingesteckt und von einem Anwender komfortabel am Körper getragen werden können.

Gemäß einer möglichen Ausgestaltungsvariante, wie sie in den Fig. 1 und 2 schematisch veranschaulicht wurde, ist zur funktionssicheren bzw. ordnungsgemäßen und in der Handhabung besonders einfachen Positionierung eines zu kontaktierenden Informationsträgers 2 in bezug zur Kontaktvorrichtung 13 bzw. Schnittstelle 15 im Gehäuse bzw. Aufnahmekörper 6 wenigstens ein fixes bzw. starres Anschlagelement 26 ausgebildet. Dieses im Gehäuse bzw. im Aufnahmekörper 6 ausgebildete Anschlagelement 26 begrenzt in dem in Fig. 2 veranschaulichten betriebsbereiten Zustand die Durchsteckweite 27 eines zu kontaktierenden Informationsträgers 2 gegenüber dem länglichen Gehäuse bzw. Aufnahmekörper 6.

Bevorzugt kann die Kontaktiereinrichtung 1 bzw. Leseeinheit weiters wenigstens eine Erfassungsvorrichtung 42 zur Ermittlung der Einnahme der ordnungsgemäßen Kontaktierungsposition eines geeigneten Informationsträgers 2 aufweisen. Diese Erfassungsvorrichtung 42 ist bevorzugt durch wenigstens ein Schaltelement 43, 44 gebildet. Anstelle der Ausbildung wenigstens eines elektrischen Schaltelementes 43, 44 zur Detektierung bzw. Sicherstellung eines ordnungsgemäß zugeführten Informationsträgers 2 ist es selbstverständlich auch möglich, jegliche anderen aus dem Stand der Technik bekannten Erfassungsvorrichtungen 42 zur Zustands- bzw. Positionserkennung vorzusehen. Demgemäß ist es selbstverständlich auch möglich, nach optischem, induktivem, kapazitive, resestivem oder sonstigem Wirkungsprinzip arbeitende Erfassungsvorrichtungen 42 vorzusehen.

Die jeweilige Erfassungsvorrichtung 42 ist dabei entweder mit dem elektronischen Schaltkreis 17 der Leseeinheit und/oder direkt mit der Schnittstelle 18 zu einer übergeordneten Recheneinheit 19 verbunden, um somit entsprechende Zustandssignale weiterleiten zu können.

Bevorzugt ist das Schaltelement 43 oder 44 dem Anschlagelement 26 möglichst nahe zugeordnet. Gemäß einer bevorzugten Ausführungsform ragt ein Betätigungsorgan des Schaltelementes 43 und/oder 44 im Ruhezustand, d.h. bei entferntem oder bei nicht ordnungsgemäß eingesetztem Informationsträger 2 gegenüber der betreffenden Anschlagkante 31 oder 32 des Anschlagelementes 26 vor. Bei plangemäß, insbesondere bei kontaktierend positioniertem Informationsträger 2 wird das Schaltelement 43 entsprechend betätigt oder umgeschaltet bzw. wird dabei dessen Betätigungsorgan in die aktive Stellung überführt.

Grundsätzlich ist es ausreichend, lediglich ein Schaltelement 43, 44 vorzusehen, welches von einer Anschlagkante 31 oder 32 des kartenförmigen Informationsträgers 2 betätigbar ist. Bevorzugt sind jedoch zwei Erfassungsvorrichtungen 42 bzw. zwei Schaltelemente 43, 44 vorzusehen. Insbesondere ist jedem der beiden Anschlagelemente 26 zumindest ein Schaltelement 43, 44 zugeordnet. Eine von einem Informationsträger 2 eingenommene Kontaktierungsposition wird nämlich erst dann als ordnungsgemäß erkannt, wenn beide Schaltelemente 43, 44 entsprechend betätigt sind bzw. die entsprechenden Schaltzustände einnehmen. Die Schaltelemente 43, 44 können dabei durch Schließer- und/oder Öffnerkontakte gebildet sein. Bei der Ausbildung zweier Erfassungsvorrichtungen 42 bzw. Schaltelemente 43, 44 können fehlerhaft bzw. ungenau zugeführte Informationsträger 2 sicher erkannt werden. Unpräzise zugeführte Informationsträger 2 können somit erkannt werden und es ist erst dann die vorgesehene Funktion der Kontaktiereinrichtung 1 bzw. der Leseeinheit erziel- bzw. einleitbar, nachdem der Informationsträger 2 ordnungsgemäß justiert wurde.

Jedenfalls wird ein zu bearbeitender Informationsträger 2 einerseits via die Wandungen der Einführöffnung 9 bzw. des Durchbruches 35 und/oder mittels innerhalb der Einführöffnung 9 angeordneter Vorsprünge bzw. dementsprechender warzenartiger Erhebungen und andererseits über die Anschlagelemente 26 relativ zum Gehäuse bzw. Aufnahmekörper 6 exakt in Höhen-, Seiten- und Längsrichtung gegenüber der Kontaktvorrichtung 13 bzw. gegenüber dem dementsprechenden Kontaktblock positioniert. D.h. ein der Kontaktiereinrichtung 1 zuzuführender Informationsträger 2 ist nicht bloß auf die Kontaktvorrichtung 13 frei aufgelegt, sondern hat im wesentlichen lediglich einen in und entgegen der Zuführrichtung - gemäß Pfeil 12 -verlaufenden Freiheitsgrad der Bewegung.

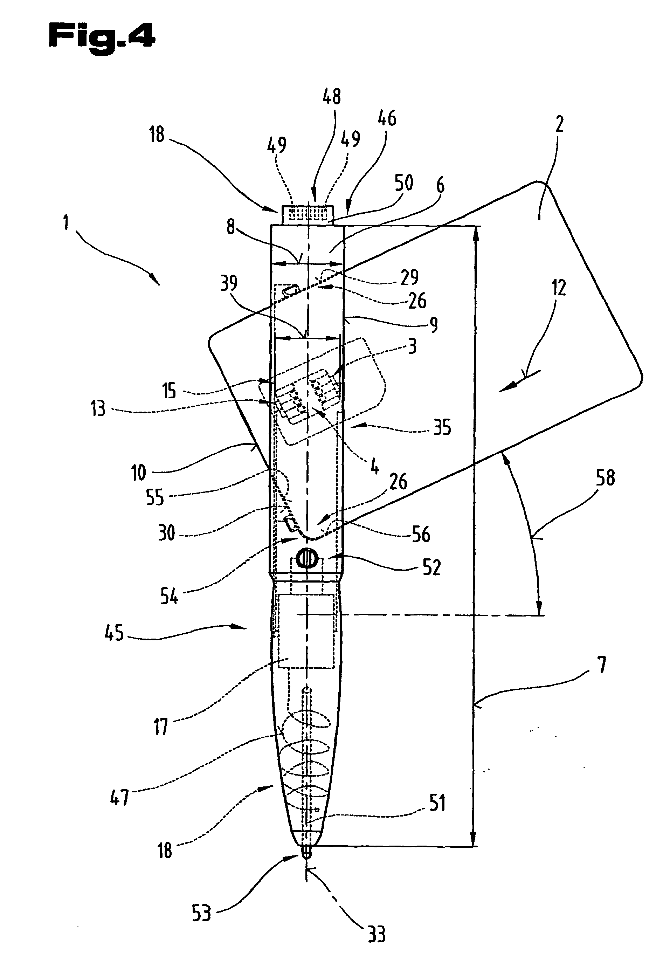

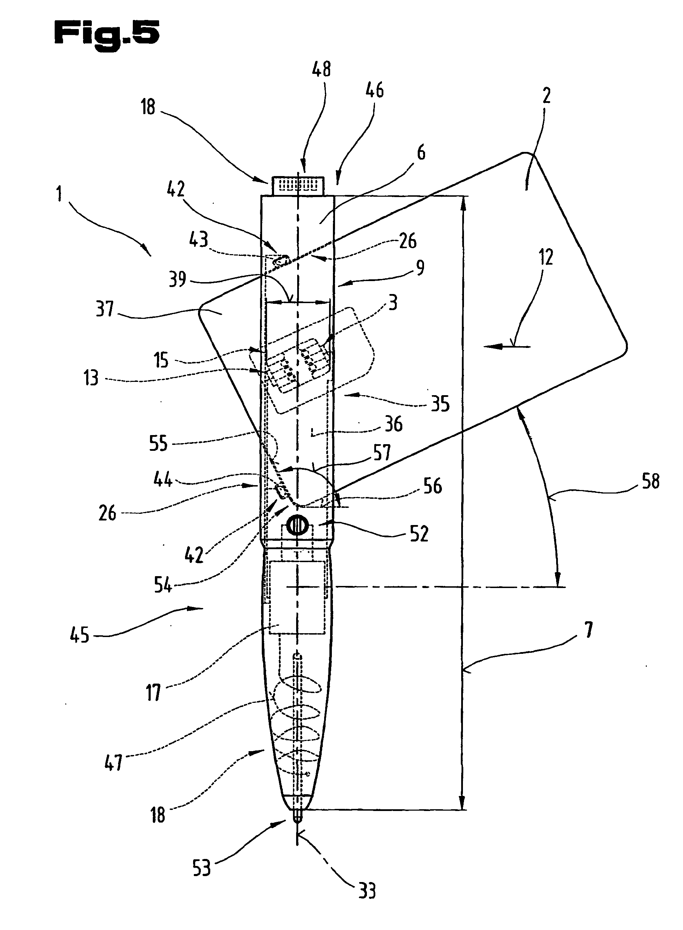

In den Fig. 4 und 5 ist eine andere Ausgestaltung der Kontaktiereinrichtung 1 schematisch vereinfacht dargestellt. Für vorhergehend bereits beschriebene Teile der Kontaktiereinrichtung 1 werden jeweils gleiche Bezugszeichen verwendet und es sind vorhergehende Beschreibungsteile sinngemäß auf gleiche Teile mit gleichen Bezugszeichen übertragbar.

Bei dieser Ausgestaltung ist die Kontaktiereinrichtung 1 in Anlehnung an die Form eines Schreibutensils 45 ausgebildet. Insbesondere ist die Kontaktiereinrichtung 1 in einem stiftartigen Gehäuse bzw. Aufnahmekörper 6 integriert und es sind zudem elektrische Komponenten zur Verwendung als elektronische Leseeinheit 46 für den Chip 3 eines zuführbaren Informationsträgers 2 im bzw. am stiftförmigen Gehäuse bzw. Aufnahmekörper 6 vorgesehen. Um den Chip 3 entsprechend ansteuern bzw ansprechen zu können, umfaßt die stiftartige Leseeinheit 46 - wie vorhergehend bereits erwähnt - den elektronischen Schaltkreis 17, welcher einerseits mit der Kontaktvorrichtung 13 in Verbindung steht und andererseits mit wenigstens einer kontaktbehafteten und/oder einer kontaktlosen Schnittstelle 18, wie z.B. einer Antenne 47, zu einer peripheren elektronischen Recheneinheit verbunden ist. Dieser elektronische Schaltkreis 17 innerhalb des stiftförmigen Gehäuses bzw. Aufnahmekörpers 6 stellt quasi den Interpreter bzw. die Interfacelogik zwischen der kontaktbehafteten Schnittstelle 15 zu einem geeigneten Informationsträger 2 und wenigstens einer beliebig ausgestalteten Schnittstelle 18 zu einer elektronischen Peripherieeinheit dar. Sofern die Leseeinheit 46 eine drahtlose Schnittstelle 18 mit einer Antenne 47 zur Aussendung und/oder zum Empfang elektromagnetischer Wellen, beispielsweise gemäß dem Bluetooth-Standard, aufweist, so umfaßt der Schaltkreis 17 auch eine elektronische Modulator- und/oder Demodulator-Schaltung. Bevorzugt ist dieser Schaltkreis 17 dann durch einen standardmäßig verfügbaren Bluetooth-Chip gebildet. Die drahtlose Schnittstelle 18 kann jedenfalls lediglich als unidirektionaler Übertragungskanal und/oder auch als bidirektionaler Übertragungskanal zum Empfangen und Senden von Informationen bzw. Daten gegenüber einer elektronischen Peripherieeinheit, wie z.B. einem Transaktionsterminal, einem Personal-Computer, einem mobilen Organizer oder dgl., vorgesehen sein. Die externe Schnittstelle 18 der Leseeinheit 46 ist dazu vorgesehen, Daten aus dem Chip 3 eines zuführbaren Informationsträgers 2 auszulesen und/ oder auf den Chip 3 eines entsprechenden Informationsträgers 2 zu schreiben bzw. vorhandene Daten zu verändem. Derartige Manipulationen des Chip 3 sind allgemein üblich und werden in vielen aus dem Stand der Technik bekannten Einsatzgebieten angewandt, so daß nicht näher darauf eingegangen wird.

Zusätzlich oder alternativ zu einer drahtlosen Funkschnittstelle mit einer Antenne 47, welche bevorzugt innerhalb des Gehäuses oder Aufnahmekörpers 6 angeordnet bzw. darin integriert ist, kann eine kontaktbehaftete Schnittstelle 18, bevorzugt in Form einer USB-Schnittstelle 48, ausgebildet sein. Eine derartige USB-Schnittstelle 48 ist idealerweise in einem stirnseitigen Endbereich der als Schreibutensil 45 ausgeführten Leseeinheit 46 angeordnet. Diese USB-Schnittstelle 48 weist einen Steckbereich mit mehreren Kontaktfahnen 49 auf, welche mit einer korrespondierenden USB-Schnittstelle einer Rechnereinheit oder mit einem geeigneten USB-Kabel 20 gemäß den Spezifikationen für eine USB-Kopplung von elektrischen Komponenten verbindbar ist.

Gemäß einer vorteilhaften Ausgestaltungsform kann die USB-Schnittstelle 48 ähnlich einem Betätigungselement 50 eines herkömmlichen Schreibutensils 45, beispielsweise eines Kugelschreibers, ausgeformt sein. Die USB-Schnittstelle 48 ist in ihrer Form also mit einem Betätigungselement 50 zum Aus- und Einfahren einer Schreibmine 51 gegenüber dem Gehäuse bzw. Aufnahmekörper 6 vergleichbar, und weist bevorzugt die Form einer aus dem Video-Bereich bekannten Mini-USB-Schnittstelle auf. Die USB-Schnittstelle 48 kann dabei lediglich eine Attrappe für ein Betätigungselement 50 der Schreibmine 51 darstellen, oder aber auch als funktionstüchtiges Betätigungselement 50 des Schreibutensils 45 bzw. der Schreibmine 51 ausgeführt sein.

Die externe Schnittstelle 18 zu peripheren elektronischen Einheiten, welche die Daten eines der Kontaktiereinrichtung 1 zugeführten Informationsträgers 2 auslesen und/oder verändern können bzw. sollen, kann aber auch als einfache Steckbuchse 52 ausgebildet sein, welche wenigstens zwei elektrische Kontakte umfaßt. In diese Steckbuchse 52 am Gehäuse bzw. Aufnahmekörper 6 der Leseeinheit 46 ist ein entsprechender Stecker, beispielsweise ein sogenannter Bananenstecker, mit Kabelverbindung zu einer übergeordneten elektronischen Auswerteeinheit bedarfsweise ein- und aussteckbar. Über diese als Steckbuchse 52 ausgebildete Schnittstelle 18 kann auch eine Versorgung des Schaltkreises 17 und/oder des Chips 3 eines Informationsträgers 2 mit elektrischer Energie erfolgen bzw. kann über diese Kontakte eine Kommunikation bzw. Datenübertragung zwischen dem Chip 3 bzw. dem Schaltkreis 17 und einer übergeordneten Recheneinheit 19 - Fig. 3 - aufgebaut werden.

Die Leseeinheit 46 erfüllt bevorzugt auch die Funktionen eines Kugelschreibers, Minenbleistifts oder eines Filzstiftes und ist dabei in seinen Abmessungen und/oder Formen einem derartigen Schreibutensil 45 zumindest ähnlich. Die schlitzförmige Einführöffnung 9 für einen karten- bzw. blattförmigen Informationsträger 2 ist bevorzugt in dem von einer Schreibspitze 53 abgewandten Abschnitt des als elektronische Leseeinheit 46 fungierenden Schreibutensils 45 vorgesehen. Eine Breite 8 bzw. ein dementsprechender Durchmesser des stiftförmigen Aufnahmekörpers 6 für die Kontaktiereinrichtung 1 entspricht in etwa einer diagonalen Erstreckung 39 des Kontaktfeldes 4 des Chips 3 in Zuführrichtung - gemäß Pfeil 12 - des kartenförmigen Informationsträgers 2. Eine Breite 8 bzw. ein Durchmesser der stiftförmigen Leseeinheit 46 kann daher lediglich in etwa 15 bis 20 mm betragen. Insbesondere kann die parallel zur Zuführrichtung - gemäß Pfeil 12 - gemessene Dimension des stiftförmigen Aufnahmekörpers 6 in etwa der auf die gleiche Richtung bezogenen Abmessung der Kontaktvorrichtung 13 bzw. des dementsprechenden Kontaktblockes entsprechen. Es können also ähnlich einem Schreibutensil 45 besonders schlanke bzw. kleinformatige Gehäuse bzw. Aufnahmekörper 6 zumindest als Kontaktiereinrichtung 1 für kartenförmige Informationsträger 2 eingesetzt werden.

Um einen kartenförmigen Informationsträger 2 im ISO-Standardformat gegenüber der Kontaktvorrichtung 13 der stiftartigen Leseeinheit 46 derart plazieren zu können, daß eine ordnungsgemäße und mühelose Kontaktierung des Kontaktfeldes 4 des Chips 3 am Informationsträger 2 gegenüber der gehäuseseitigen Kontaktvorrichtung 13 gewährleistet ist, ist am Aufnahmekörper 6 der Leseeinheit 46 wiederum wenigstens ein unbewegliches Anschlagelement 26 ausgebildet.

Insbesondere sind im Gehäuse bzw. Aufnahmekörper 6 zwei Anschlagelemente 26 ausgebildet. Einer der beiden Anschlagelemente 26 ist dabei als Winkelanschlag 54 mit zwei winkelig zueinander verlaufenden Begrenzungskanten 55, 56 gebildet. Wie aus Fig. 4 ersichtlich ist, können diese den Winkelanschlag 54 bildenden Begrenzungskanten 55, 56 im wesentlichen rechtwinkelig zueinander verlaufen.

Alternativ ist es aber auch möglich, einen Winkel 57 zwischen den zwei Begrenzungskanten 55, 56 des Winkelanschlages 54 bzw. des demgemäßen Anschlagelementes 26 zwischen 90° und 150° festzulegen, wie dies aus Fig. 5 ersichtlich ist.

Ein derartiger Winkelanschlag 54 in der Einführöffnung 9 für den kartenförmigen Informationsträger 2 erleichtert eine exakte Positionierung des Kontaktfeldes 4 des Informationsträgers 2 gegenüber der Kontaktvorrichtung 13. Insbesondere ist es ermöglicht, den Informationsträger 2 besonders rasch und mühelos in jene Position zu versetzen, in welcher der kontaktbehaftete Chip 3 am Informationsträger 2 mit der Leseeinheit 46 bzw. deren Kontaktiereinrichtung 1 ordnungsgemäß und zuverlässig elektrisch verbunden ist.

Die Funktion bzw. Verwendung der Kontaktiereinrichtung 1 bzw. Leseeinheit 46, gemäß Fig. 4, ist dabei folgendermaßen:

Ein kartenförmiger Informationsträger 2 ist schiefwinklig zur Längsmittelachse 33 der stab- bzw. stiftförmigen Kontaktiereinrichtung 1 bzw. Leseeinheit 46 znzuführen. Insbesondere ist der kartenförmige Informationsträger 2 mit jener Breitseite 10 voran, welche zum Chip 3 bzw. zu dessen Kontaktfeld 4 am nächsten liegt, so weit in die Einführöffnung 9 bzw. in den Durchbruch 35 einzuführen, bis zueinander distanzierte Kantenbereiche 29, 30 des Informationsträgers 2 an den zueinander distanzierten Anschlagelementen 26, insbesondere an einem geradlinigen Anschlagelement 26 und am Winkelanschlag 54, auftreffen bzw. anliegen. Bei der Ausgestaltung gemäß Fig. 4 ist dabei eine exakt vorbestimmte, schiefwinkelige Zuführung des Informationsträgers 2 in einem bestimmten Zuführwinkel 58 gegenüber der Längsmittelachse 33 der Leseeinheit 46 erforderlich. Dieser Zuführwinkel 58 zwischen der Längsachse des Informationsträgers 2 zu einer Querachse zur Längsmittelachse 33 der Leseeinheit 46 kann dabei in etwa 10° bis 80°, bevorzugt in etwa 30° bis 45°, betragen.

Bei der Ausgestaltung gemäß Fig. 5 kann der kartenförmige Informationsträger 2 bezugnehmend auf seine Längsachse auch rechtwinkelig zur Längsmittelachse 33 der Leseeinheit 46 zugeführt bzw. in dessen Einführoffnung 9 bzw. Durchbruch 35 eingeführt werden. Die Zuführbewegung des Informationsträgers 2 im rechten Winkel zur Längsmittelachse 33 wird via die Anschlagelemente 26 schließlich begrenzt und es ist sodann der kartenförmige Informationsträger 2 geführt und begrenzt durch den Winkelanschlag 54 soweit zu verdrehen, bis die ordnungsgemäße Kontaktierung des Kontaktfeldes 4 mit der Kontaktvorrichtung 13 eintritt. Insbesondere ist der kartenförmige Informationsträger 2 innerhalb seiner Auflageebene 36 bzw. parallel zu dessen Flachseiten in etwa um den Zuführwinkel 58 zu drehen bzw. zu kippen, um in die ordnungsgemäße Kontaktierungsposition zu gelangen.

Diese Kontaktierungsposition kann wiederum durch wenigstens eine Erfassungsvorrichtung 42 detektiert werden. Diese Erfassungsvorrichtungen 42 sind bevorzugt durch die Schaltelemente 43, 44 gebildet, welche erst betätigt werden, wenn der kartenförmige Informationsträger 2 seine ordnungsgemäße, schiefwinkelige Ausrichtung gegenüber der Längsmittelachse 33 der Kontaktiereinrichtung 1 bzw. der Leseeinheit 46 einnimmt.

Auch hierbei ist die Kontaktvorrichtung 13 der Leseeinheit 46 bzw. der Kontaktiereinrichtung 1 schräg bzw. schiefwinkelig zur Längsmittelachse 33 des stift- bzw. stabförmigen Gehäuses oder Aufnahmekörpers 6 ausgerichtet. Die wenigstens eine Erfassungsvorrichtung 42 ist, wie schematisch veranschaulicht wurde, mit dem elektronischen Schaltkreis 17 leitungsverbunden, um die entsprechenden Erfassungs- bzw. Zustandssignale weiterleiten zu können. Bevorzugt wird erst dann, wenn die ordnungsgemäße Position des Informationsträgers 2 detektiert ist, eine Energie- bzw. Signalübertragung von der Leseeinheit 46 zum Chip 3 oder umgekehrt vorgenommen. Dadurch werden Kurzschlüsse bzw. fehlerhafte Energiebeaufschlagungen des Chips 3 am Informationsträger 2 vermieden.

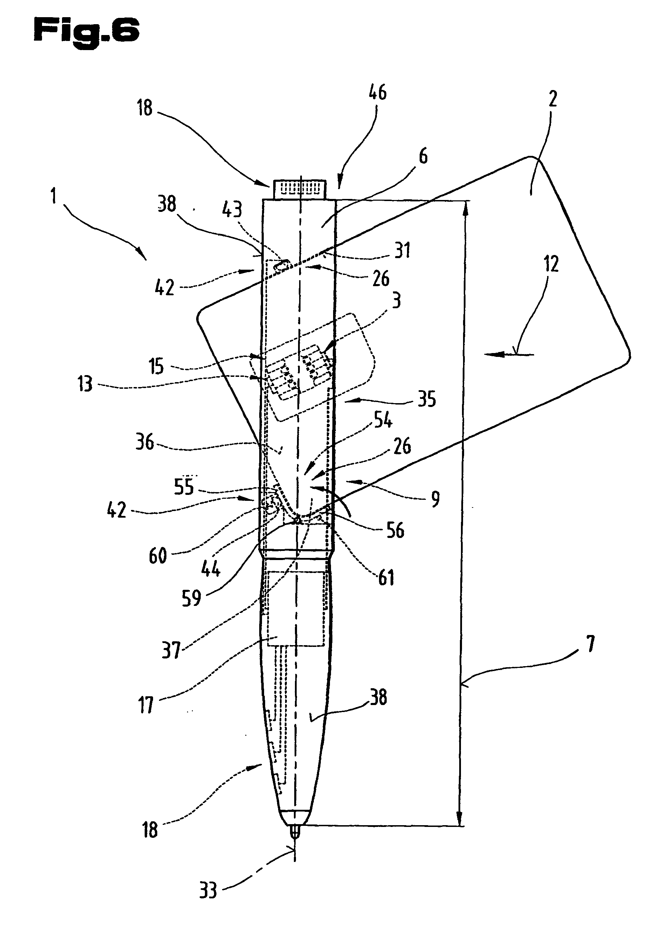

In Fig. 6 ist eine andere Ausgestaltung der Kontaktiereinrichtung 1 bzw. Leseeinheit 46 gezeigt. Die vorhergehenden Beschreibungen sind dabei sinngemäß auf gleiche Teile mit gleichen Bezugszeichen übertragbar.

Bei dieser Ausführungsform der Kontaktiereinrichtung 1 in der Leseeinheit 46 ist ein Anschlagelement 26 vorgesehen, welches gleichfalls als Winkelanschlag 54 ausgebildet ist. Dieser Winkelanschlag 54 ist dabei um eine vertikal zur Auflageebene 36 bzw. um eine vertikal zur Flachseite eines zuführbaren Informationsträgers 2 verlaufende Schwenkachse 59 verschwenkbar gelagert. Der Winkelanschlag 54 umfaßt wiederum im wesentlichen rechtwinkelig zueinander ausgerichtete Begrenzungskanten 55, 56, welche als Aufnahme- bzw. Positionieranschlag für einen Eckbereich 37 des kartenförmigen Informationsträgers 2 dienen.

Dieser verschwenkbare Winkelanschlag 54 ist bevorzugt innerhalb der Einführöffnung 9 für den Informationsträger 2 angeordnet. Der Winkelanschlag 54 kann dabei haken-, L-, oder dreieckförmig ausgebildet sein und via die gehäuseseitige Schwenkachse 59 je nach gewählter Dimensionierung gegenüber der Mantelfläche 38 des stab- oder stiftförmigen Gehäuses oder Aufnahmekörpers 6 bedarfsweise aus- und einschwenkbar sein. Vorteile in der Dimensionierung ergeben sich, wenn die Schwenkachse 59 für den Winkelanschlag 54 in einem randseitigen Bereich des Gehäuses oder Aufnahmekörpers 6 ausgebildet ist. Vor allem dann, wenn die Schwenkachse 59 im Bereich der auf die Zuführrichtung - Pfeil 12 - bezogenen

Austrittsöffnung des Durchbruches 35 ausgebildet ist, lassen sich relativ großzügigdimensionierte Winkelanschläge 54 aufbauen, welche eine hohe Positioniergenauigkeit und Robustheit erzielen können.

Sofern der Winkelanschlag 54 in seiner Verschwenkbarkeit um die Schwenkachse 59 begrenzt wird, wie dies mit strichlierten Linien angedeutet wurde, ist es nicht zwingend erforderlich, ein weiteres, eigenständiges Anschlagelement 26 vorzusehen. Für die Erzielung einer hohen Robustheit und Positioniergenauigkeit kann es jedoch vorteilhaft sein, ein weiteres Anschlagelement 26 in Art einer schräg verlaufenden Anschlagkante 31 vorzusehen, wie dies in Fig. 6 veranschaulicht wurde. Wesentlich ist, daß der Informationsträger 2 im Bereitschaftszustand für zum Auslesen und/oder zum Hinterlegen von Daten schiefwinkelig, also von 90° abweichend, zur Längsmittelachse 33 der Kontaktiereinrichtung 1 bzw. der Leseeinheit 46 ausgerichtet ist und dem Gehäuse oder Aufnahmekörper 6 mit einfachen technischen Mitteln mühelos und positionsgenau zugeführt werden kann.

Selbstverständlich ist es aber auch möglich, sowohl dem Winkelanschlag 54 einen diessen Verschwenkbarkeit begrenzenden Anschlag zuzuordnen, als auch eine die Verschwenkbewegung des Informationsträgers 2 begrenzende Anschlagkante 31 im bzw. am Gehäuse oder Aufnahmekörper 6 vorzusehen.

Wesentlich ist, daß ein zu kontaktierender Informationsträger 2 durch Verdrehung um eine reale Schwenkachse 59 oder um eine gedachte bzw. imaginäre Vertikalachse zu seinen Flachseiten (siehe Fig. 5) in die gegenüber der Längsmittelachse 33 des Gehäuses oder Aufnahmekörpers 6 schräggestellte Kontaktierungsposition gelangt.

Optional kann auch bei dieser Ausführungsform der Leseeinheit 46 wenigstens eine Erfassungsvorrichtung 42 zur Erkennung einer ordnungsgemäß eingenommenen Position eines Informationsträgers 2 ausgebildet sein. Die Erfassungsvorrichtung 42 bzw. deren Schaltelement 44 kann dabei auch dem verschwenkbaren Winkelanschlag 54 zugeordnet sein und in jener Drehwinkelstellung, in welcher ein entsprechender Informationsträger 2 kontaktierend positioniert ist, entsprechend betätigt bzw. beaufschlagt werden. Alternativ oder in Kombination dazu ist es auch möglich, im Bereich der schräg verlaufenden Anschlagkante 31 des weiteren Anschlagelementes 26 eine Erfassungsvorrichtung 42, beispielsweise ein Schaltelement 43, vorzusehen.

Optional kann der verschwenkbar gelagerte Winkelanschlag 54 mittels wenigstens einem Federmittel 60 in eine definierte Ausgangsstellung gedrängt werden. Diese Ausgangsstellung soll die Zufuhr eines Informationsträgers 2 erleichtern bzw. die Handhabung der Leseeinheit 46 weiter vereinfachen. Dieses Federmittel 60 kann in Abhängigkeit der Dimensionierung des Winkelanschlages 54 auch bewirken, daß der Winkelanschlag 54 stets zumindest teilweise in die, in die Einführöfmung 9 eingezogene Ausgangsstellung gedrängt wird. Ist also der Leseeinheit 46 kein Informationsträger 2 zugeführt, so befindet sich der Winkelanschlag 54 automatisch in der eingefahrenen Ausgangsposition, so daß die Gefahr einer Beschädigung der Leseeinheit 46 minimiert ist.

Bevorzugt ist wenigstens ein Federmittel 60 ausgebildet, über welches der Winkelanschlag 54 federbelastet in die eingezogene Ausgangs- bzw. Ruheposition gedrückt wird. Das Federmittel 60 kann dabei durch eine sogenannte Teller- oder auch durch eine Schraubenfeder gebildet sein. Alternativ dazu ist es auch möglich, als Federmittel 60 einen gummielastischen Block oder dgl. vorzusehen, welcher an einer Widerlagerfläche des Winkelanschlages 54 anliegt und dabei eine Kraflwirkung ausübt, die den Winkelanschlag 54 in die eingefahrene Stellung drängt. Es ist aber auch möglich, ein gummielastisches Band vorzusehen, mit welchem der Winkelanschlag 54 in die eingefahrene Stellung gezogen wird.

Alternativ oder zusätzlich zu diesem Federmittel 60 können auch Rastelemente 61 vorgesehen sein, mit welchen der Winkelanschlag 54 gesichert in der Ausgangsposition gehaltert wird. Im einfachsten Fall sind diese Rastelemente 61 durch warzenförmige Erhebungen gebildet, welche im Verstellbereich des Winkelanschlages 54 angeordnet sind. Mittels dieser Rastelemente 61 ist gewährleistet, daß der Winkelanschlag 54 in der jeweiligen Stellung zuverlässig verharrt und erst bei Überschreiten einer vorbestimrnten Verstellkraft über das Rastelement 61 hinwegbewegt wird und in eine andere Position bzw. Stellung überführt werden kann bzw. durch die wirkende Federkraft in eine andere Position verstellt wird. Bei der optionalen Ausbildung wenigstens eines Schnapp- bzw. Rastelementes 61 ist vorteilhaft, daß das Anschlagelement 26, insbesondere der Winkelanschlag 54 ausgeklappt werden kann und im ausgeklappten Zustand in dieser Aktivstellung verharrt, so daß aufeinanderfolgend beispielsweise mehrere Informationsträger 2 zugeführt werden können, ohne daß der Winkelanschlag 54 jeweils bewegt werden muß. Durch einfaches Um- bzw. Einklappen des Winkelanschlages 54 per Fingerdruck kann dann wieder die kompakte und gegebenenfalls ebenso über entsprechende Rastelemente 61 gesicherte Ruhestellung des Winkelanschlages 54 eingenommen werden.

Die Federmittel 60 und Rastelemente 61 können dabei kombiniert als auch wahlweise eingesetzt werden. Als Rastelement 61 eignen sich warzenförmige Erhebungen und/oder korrespondierende Vertiefungen bzw. Schaltnocken, Federzungen, Raststifte und ähnliche, in vielfältigen Ausführungen aus dem Stand der Technik bekannte Elemente.

Bevorzugt sind die Rastelemente 61 im Schwenkbereich des Winkelanschlages 54 und zwar nahe dessen Lagerstelle bzw. Schwenkachse 59 ausgebildet.

Die Aktivierung des Winkelanschlages 54 kann dabei durch manuelles Ergreifen desselben erfolgen, oder aber auch mit der Einführbewegung eines Informationsträgers 2 gekoppelt werden. D.h., daß der Winkelanschlag 54 beim Einführen des entsprechenden Informationsträgers 2 in die Einführöffnung 9 automatisch in die ausgeschwenkte Stellung bzw. in seine Aktivstellung bewegt wird, indem zumindest eine seiner Begrenzungskanten 55, 56 zwangsweise verstellt wird bzw. ausklappt. Die Zuführbewegung des Informationsträgers 2 ist dabei also mit der anschlagbegrenzten Verschwenkbewegung des Winkelanschlages 54 bewegungsgekoppelt. Es ist dabei lediglich darauf zu achten, daß die von eventuellen Federmitteln 60 und/oder von Rastelementen 61 auf den Winkelanschlag 54 einwirkenden Haltekräfte durch die Einschiebebewegung eines geeigneten Informationsträgers 2 problemlos überwunden werden können.

Der in Draufsicht L- bzw. hakenförmige Winkelanschlag 54 ist in der Ruhe- oder Ausgangsposition derart angeordnet, daß dessen von seinen beiden Schenkeln eingeschlossener Bereich zumindest großteils innerhalb der Einführöffnung 9 liegt. Ein erforderlicher Schwenkbereich für den Winkelanschlag 54 kann je nach Anordnung der Schwenkachse 59 10 ° bis 80 °, im Regelfall in etwa 45 °, betragen. Die auf die Kartenebene bezogene L-Form des Winkelanschlages 54 mit der Schwenkachse 59 in den einander zugewandten Endbereichen der beiden Schenkel begünstigt dabei, daß die Zuführbewegung des Informationsträgers 2 mit der Ausstellbewegung des Winkelanschlages 54 einhergeht.

Die in den Fig. 1 bis 6 gezeigte Ausführung der Kontaktiereinrichtung 1 bzw. der Leseeinheit 46 kann für kartenförmige Informationsträger 2 mit der Größe einer Smart-Card bzw. im ISO-Format, oder aber für dazu vergleichsweise kleinformatigere Informationsträger 2, insbesondere für sogenannte SIM-Karten, vorgesehen sein. Wesentliche Änderungen sind hierbei nur in der Größe der Einführöffnung 9 und hinsichtlich der Dimensionierung und Anordnung der Anschlagelemente 26 vorzunehmen.

Wie aus Fig. 6 weiters ersichtlich ist, kann als kontaktbehaftete Schnittstelle 18 zur einer Recheneinheit und/oder zu einer nachfolgend noch beschriebenen Basisstation an der Mantelfläche 38 des stiftförmigen Gehäuses bzw. Aufnahmekörpers 6 auch wenigstens ein flächiges Kontaktelement ausgebildet sein. Diese Kontaktelemente schließen dabei bevorzugt bündig mit der Mantelfläche 38 ab und sind zur Erzielung einer langfristig guten Kontaktverbindung möglichst korrosions- bzw. oxidationsfest ausgebildet. Beispielsweise können die einzelnen Kontaktelemente vergoldet ausgebildet sein.

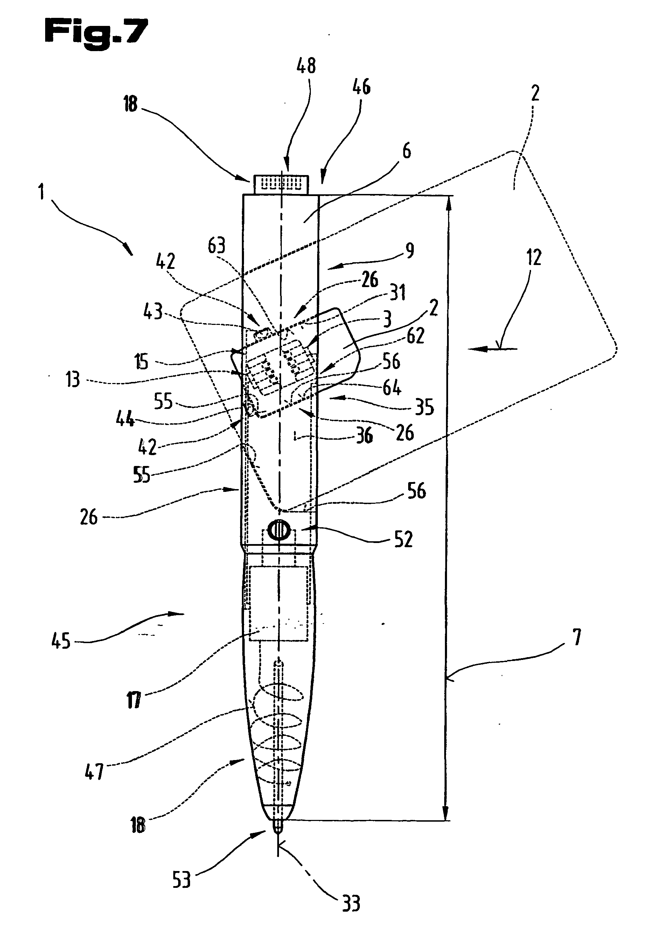

In Fig. 7 ist eine andere Ausgestaltung der Kontaktiereinrichtung 1 bzw. der Leseeinheit 46 gezeigt. Die vorhergehenden Beschreibungen sind dabei sinngemäß auf gleiche Teile mit gleichen Bezugszeichen übertragbar.

Bei dieser Ausführungsform der Leseeinheit 46 bzw. Kontaktiereinrichtung 1 ist wesentlich, daß wahlweise großformatige Informationsträger 2 im standardisierten ISO-Format bzw. sogenannte Smart-Cards und auch vergleichsweise kleinformatigere Informationsträger 2 in Form von sogenannten SIM-Karten zuführbar sind.

Bei diesen kleinformatigeren Informationsträgern 2 in Form von sogenannten SIM-Karten kommt die Möglichkeit des Aufbaus einer besonders kompakten Kontaktiereinrichtung 1 bzw. Leseeinheit 46 zwar weniger zur Geltung, eine wahlweise Zufuhrmöglichkeit von klein- oder großformatigen Informationsträgern 2 zu einer Leseeinheit 46 bzw. Kontaktiereinrichtung 1 ist dennoch von besonderem Vorteil. Hierfür umfaßt die Leseeinheit 46 neben den zuvor beschriebenen Anschlagelementen 26 für einen großformatigen Informationsträger 2 zusätzlich wenigstens ein Positioniermittel 62 für einen kartenförmigen Informationsträger 2 im vergleichsweise kleineren SIM-Format. Dieses Positioniermittel 62 umfaßt wenigstens eine gegenüber der Längsmittelachse 33 schräg bzw. schiefwinkelig ausgerichtete Führungsleiste 63 für einen vergleichsweise kleinformatigeren Informationsträger 2.

Dieses Positioniermittel 62 kommt insbesondere dann zur Wirkung, wenn der Leseeinheit 46 ein kleinformatiger Informationsträger 2 zugeführt wird. Sofern der Leseeinheit 46 ein vergleichsweise großformatiger Informationsträger 2 im Form einer Smart-Card, insbesondere eine sogenannte Chip-Karte zugeführt wird, kommen diese im speziellen für eine SIM-Karte vorgesehenen Positioniermittel 62 nicht zur Geltung.

Das Positioniermittel 62 umfaßt im konkreten Fall zwei, im wesentlichen in der Breite der SIM-Karte zueinander beabstandete Führungsleisten 63, 64. Diese Führungsleisten 63, 64 gewährleisten, daß die SIM-Karte bzw. der kleinformatige Informationsträger 2 exakt in der vorgesehenen, schiefwinkeligen Zuführrichtung zur Längsmittelachse 33 der Kontaktvorrichtung 13 bzw. der Leseeinheit 46 zuführbar ist. Insbesondere ermöglicht das Positioniermittel 62 mit den Führungsleisten 63, 64 eine lineare, verdrehgesicherte und exakt ausgerichtete Zuführung des kleinformatigen Informationsträgers 2 relativ zu den Kontaktelementen 14 der gehäuseseitigen Kontaktvorrichtung 13, obwohl die schlitzförmige Einführöffnung 9 auch für vergleichsweise großformatige Informationsträger 2 dimensioniert ist. Die Führungsleisten 63, 64 für eine zu verarbeitende SIM-Plug-IN-Karte sind dabei innerhalb der schlitzförmigen Einführöffnung 9, welche eigentlich zur Zufuhr eines vergleichsweise großformatigeren Informationsträgers 2 dimensioniert ist, angeordnet bzw. ausgebildet.

Wesentlich ist dabei, daß keinerlei verstellbar, insbesondere verschwenkbar oder verschiebbar gelagerte Elemente erforderlich sind, um einen kontaktbehafteten Informationsträger 2 exakt gegenüber der Kontaktvorrichtung 13 positionieren zu können und zugleich relativ kompakte Gehäuseformen zu erzielen.

Gemäß einer vorteilhaften Weiterbildung können zumindest Teilbereiche des Gehäuses oder Aufnahmekörpers 6 transparent bzw. lichtdurchlässig ausgebildet sein. Insbesondere empfiehlt es sich, vor allem die Bereiche um den Durchbruch 35 bzw. die Mantelbereiche, welche die Einführöffnung 9 umgeben, transparent oder lichtdurchlässig zu gestalten. Dadurch kann eine exakte Positionierung eines kartenförmigen Informationsträgers 2 gegenüber den Anschlagelementen 26 bzw. gegenüber der Kontaktvorrichtung 13 nochmals deutlich erleichtert werden. Dieser transparente Teilbereich stellt dabei ein sogenanntes Sichtfenster zur noch einfacheren Positionierung des Gehäuses oder Aufnahmekörpers 6 gegenüber dem kartenförmigen Informationsträger 2 dar.

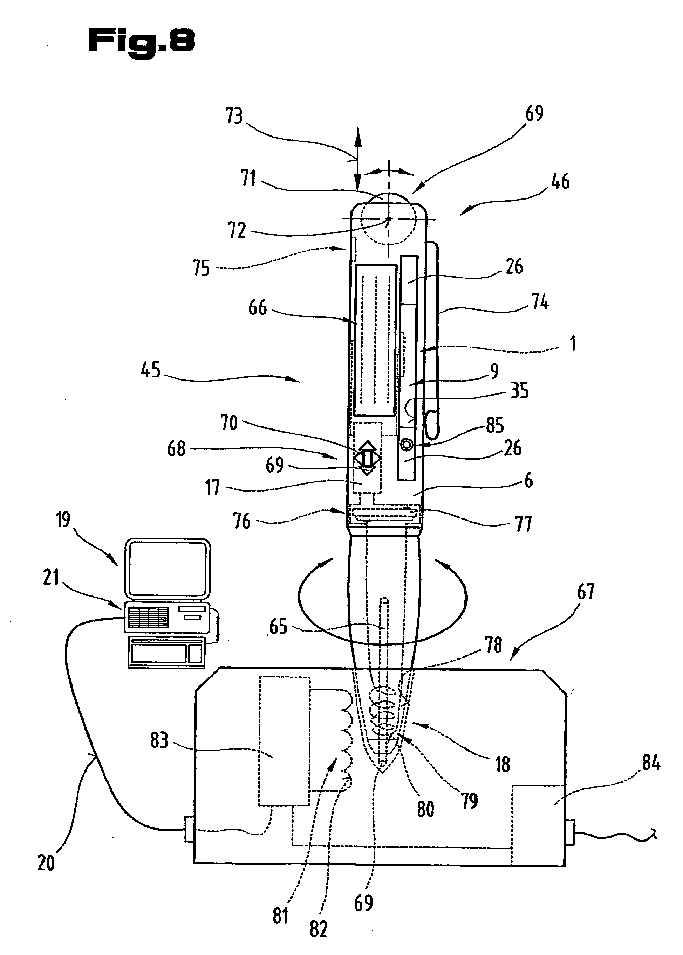

In Fig. 8 ist eine mögliche Weiterbildung der Leseeinheit 46 mit der Kontaktiereinrichtung 1 für kartenförmige Informationsträger - nicht dargestellt - gezeigt. Die vorhergehenden Beschreibungen sind dabei sinngemäß auf gleiche Teile mit gleichen Bezugszeichen übertragbar.

Auch hierbei ist das Gehäuse bzw. der Aufnahmekörper 6 für die Kontaktiereinrichtung 1 im wesentlichen stift- oder stabförmig ausgebildet und umfaßt u.a. zwei starre, zueinander distanzierte Anschlagelemente 26 zur exakten Positionierung der Kontaktierungsflächen eines Informationsträgers relativ zur Tiefenrichtung des Durchbruches 35 durch das Gehäuse bzw. den Aufnahmekörper 6. Im Besonderen ist diese Leseeinheit 46 als Schreibutensil 45, beispielsweise in Form eines Kugelschreibers mit einer Schreibmine 65, ausgebildet.

Zusätzlich umfaßt diese Leseeinheit 46 eine Anzeigeeinheit 66 zur visuell erfaßbaren Darstellung von Informationen bzw. Daten. Bevorzugt ist diese Anzeigeeinheit 66 durch ein ein- oder mehrzeiliges LCD-Display gebildet. Selbstverständlich ist es auch möglich, die Anzeigeeinheit 66 durch beliebige, aus dem Stand der Technik bekannte Visualisierungselemente, beispielsweise durch Sieben-Segment-Anzeigen, LED-Anordnungen oder dgl. zu bilden.

Neben dieser optischen Ausgabevorrichtung ist es auch möglich, akustische Ausgabevorrichtungen, beispielsweise in Form von Summern, Lautsprechern oder dgl. an der Leseeinheit 46 vorzusehen, um damit akustische Signale, beispielsweise Piepstöne, Sprachinformationen oder dgl. auszugeben.

Ebenso umfaßt die stiftförmige Leseeinheit 46 eine Schnittstelle 18, insbesondere ein sogenanntes HOST-Interface zur bedarfsweisen Verbindung mit einer übergeordneten Recheneinheit 19. In diesem Ausführungsbeispiel ist die Schnittstelle 18 drahtlos ausgebildet und zur Übertragung und/oder zum Empfang von Energie und/oder Daten in bezug zu einer korrespondierenden Gegenstelle an einer Basisstation 67 vorgesehen. Diese Basisstation 67 bildet eine eigenständige Baueinheit, zu welcher die stiftförmige Leseeinheit 46 körperlich und/oder kommunikativ zuordenbar ist.

Zudem umfaßt die Leseeinheit 46 wenigstens eine Eingabevorrichtung 68 zur Eingabe von Daten und/oder zur Beeinflussung der Betriebszustände oder des Betriebsverhaltens der Leseeinheit 46 bzw. des integrierten Schaltkreises 17. Die Eingabevorrichtung 68 umfaßt dabei wenigstens ein von einem Benutzer betätigbares Bedienelement 69. Dieses Bedienelement 69 kann dabei als Schalter, Taster 70 und/oder als Auswahlrad 71 ausgebildet sein. Dieses wenigstens eine Bedienelement 69 in beliebiger Ausgestaltung dient jedenfalls zur Bedienung der Leseeinheit 46 bzw. zur Beeinflussung dessen Betriebszustände. Zusätzlich kann das jeweilige Bedienelement 69 zur Auswahl, Bestätigung oder zur Eingabe eines Codes, insbesondere eines PIN-Codes, vorgesehen sein.

Bei Ausgabe eines Bediemnenüs über die Anzeigeeinheit 66 können die Bedienelemente 69 zur Menüführung bzw. Menüsteuerung herangezogen werden, wodurch auch bei einer Vielzahl möglicher Funktionen der Leseeinheit 46 eine übersichtliche und einfache Bedienung ermöglicht ist.

Sofern als Bedienelement 69 ein Auswahlrad 71 ausgebildet ist, ist dieses bevorzugt in dem von der Schreibmine 65 abgewandten Endbereich der stiftförmigen Leseeinheit 46 angeordnet und anstelle des üblichen Betätigungselementes zum Aus- und Einfahren der Schreibmine 65 vorgesehen. Das Auswahlrad 71 kann dabei neben der durch einen gekrümmten Pfeil angedeuteten Drehbeweglichkeit um eine Drehachse 72 auch vertikal zu dessen Drehachse 72 verstellbar gelagert sein, wie dies durch den Doppelpfeil 73 veranschaulicht ist. Diese Vertikalbeweglichkeit gemäß Doppelpfeil 73 des Auswahlrades 71 wird bevorzugt zur Bestätigung bzw. zur Selektion einer bestimmten Funktion von aus einer Mehrzahl zur Verfügung stehender Auswahlmöglichkeiten genutzt. Dieses verdrehbar gelagerte Auswahlrad 71 hat somit auch die Funktion eines Bestätigungs- bzw. Eingabeelementes, wenn es gemäß Doppelpfeil 73 betätigt wird.

Unabhängig davon können aber auch Bedienelemente 69 in Form von Pfeil-Tasten angeordnet sein, welche funktional mit Cursor-Tasten vergleichbar sind.

Mittels der Anzeigeeinheit 66 und unter eventueller Verwendung der Bedienelemente 69 sind zumindest manche der im Datenspeicherelement eines zugeführten Informationsträgers hinterlegten Daten anzeig- bzw. visualisierbar. Insbesondere können über die Anzeigeeinheit 66 Restguthaben, Laufdauerbeschränkungen, Benutzerdaten, Transaktionsdaten, Daten zur Nutzungshistory oder sonstige für den jeweiligen Verwendungszweck und/oder Anwendungsbereich relevante Daten visualisiert werden.

Gemäß einer möglichen Weiterbildung der stiftförmigen Leseeinheit 46 ist die Spitze der Schreibmine 65 als Bedienelement 69 ausgebildet, wodurch die Leseeinheit 46 in Art des zuvor beschriebenen Zeigegerätes bzw. Rollballes bzw. als sogenannte "Mouse" verwendbar ist.

Alternativ ist es auch möglich, eine kombinierte optische Ausgabe- und Eingabevorrichtung in Art eines Touch-Screen an der Leseeinheit 46 vorzusehen. Dadurch kann die Zahl der Bedienelemente 69 in Form von Tasten bzw. Druckknöpfen am Gehäuse bzw. Aufnahmekörper 6 reduziert werden, so daß diese stiftförmige Leseeinheit 46 besonders kompakt ausgestaltet werden kann. Darüber hinaus kann ein hoher Bedienungskomfort der Leseeinheit 46 erzielt werden.

Zum sicheren Einstecken der als Schreibutensil 45 ausgebildeten Leseeinheit 46 kann am Gehäuse bzw. Aufnahmekörper 6 ein bei Schreibstiften an sich üblicher Haltebügel 74 zur Befestigung an Kleidertaschen von Sakkos oder dgl. angeordnet sein.

Gemäß einer möglichen Ausgestaltung der stiftförmigen Leseeinheit 46 kann diese auch wenigstens einen Sensor 75 zur Erfassung biometrischer Merkmale eines potentiellen Benutzers der Leseeinheit 46 umfassen. Dieser biometrische Sensor 75 kann dabei durch einen Fingerprintsensor zur Aufnahme von Fingerabdrücken gebildet sein oder durch ein Mikrophon und einen nachgeschalteten Auswerteschaltkreis zur Erkennung von Stimmen und/oder zur Erkennung von Sprachtext realisiert sein. Ein derartiger elektronischer Auswerteschaltkreis ist bevorzugt Bestandteil des ebenso vom Gehäuse oder Aufnahmekörper 6 aufgenommenen, elektrischen Schaltkreises 17 der Leseeinheit 46.

Mittels diesem biometrischen Sensor 75 ist es ermöglicht zu überprüfen, ob die eine Verwendungsabsicht zeigende Person berechtigt ist, die Leseeinheit 46 zu benutzen, um damit verschiedene Funktionen auszuführen bzw. bestimmte Aktionen einzuleiten. Insbesondere kann über diesen Sensor 75 der jeweilige Benutzer der Leseeinheit 46 identifiziert und/oder authentifiziert werden. Unabhängig davon ist es selbstverständlich auch möglich, einen der Leseeinheit 46 zuführbaren kartenförmigen Informationsträger zur Identifizierung und/oder Authentifizierung des Anwenders heranzuziehen und nach positivem Überprüfungsergebnis die Nutzungsberechtigung für die Leseeinheit 46 zu erteilen.

Gemäß einer möglichen Ausgestaltung kann auch ein Sicherheitsmodul in Form eines SAM-Modules in die Leseeinheit 46 integriert sein. Ein derartiges SAM-Modul (Security Access Module bzw. Security Application Module) ist bevorzugt durch einen in die Leseeinheit 46 fix eingebauten Elektronikschaltkreis gebildet, welcher Sicherheitsaufgaben wahrnimmt.

Die zuvor beschriebenen elektrischen bzw. elektronischen Komponenten, wie Anzeigeeinheit 66, Eingabevorrichtung 68, Bedienelement 69 und Sensor 75 sind mit dem zentralen, elektrischen Schaltkreis 17, welcher bevorzugt einen Mikrorechner umfaßt, leitungsverbunden. Dieser Mikrorechner kann dabei softwaregesteuert ausgebildet sein und den zentralen Controller der Leseeinheit 46 darstellen.

Die kompakte, tragbare Leseeinheit 46 umfaßt weiters wenigstens eine elektrochemische Spannungsquelle 76 in Form von Akkumulatoren 77 bzw. Batterien. Bevorzugt werden jedoch Akkumulatoren 77 eingesetzt, welche über eine geeignete Ladestation, insbesondere via die Basisstation 67, nach- bzw. aufladbar sind. Die elektrochemischen Spannungsquellen 76 sind bevorzugt auswechselbar im Gehäuse bzw. Aufnahmekörper 6 der Leseeinheit 46 angeordnet und können - wie schematisch dargestellt - durch sogenannte Knopfzellen gebildet sein. Selbstverständlich ist es aber auch möglich, handelsübliche, stabförmige Akkumulatoren 77 mit zylinderförmiger Gestalt zu verwenden. Batterien bzw. Akkumulatoren 77 mit zylindrischer Form eignen sich dabei besonders, in das Gehäuse bzw. den Aufnahmekörper 6 der Leseeinheit 46 auswechselbar integriert zu werden und dabei eine hohe elektrische Leistung zur Verfügung zu stellen.

Wie vorhergehend bereits erläutert, kann die Leseeinheit 46 einer baulich eigenständigen, als Tischgerät ausgebildeten Basisstation 67 zugeordnet werden. Diese Basisstation 67 weist eine Ausnehmung 78 auf, in welche ein Teilbereich der Leseeinheit 46 eingesetzt werden kann. Insbesondere ist der der Schreibmine 45 zugeordnete End- bzw. Spitzenbereich der stiftförmigen Leseeinheit 46 in die Ausnehmung 78 der Basisstation 67 einsteckbar. Mittels dieser Ausnehmung 78 wird eine Halterung bzw. Positionierung der Leseeinheit 46 gegenüber der Basisstation 67 erreicht. Die Ausnehmung 78 ist dabei in einem Oberflächenbereich der Basisstation 67 angeordnet und derart ausgerichtet, daß eine weitgehendst vertikale bzw. stehende Positionierung bzw. Halterung der Leseeinheit 46 gegeben ist.

Die draht- bzw. kontaktlose Schnittstelle 18 der Leseeinheit 46, welche durch eine Antenne bzw. eine demgemäße Spule gebildet ist, befindet sich bei der Basisstation 67 zugeordneter Leseeinheit 46 weitgehendst innerhalb der Ausnehmung 78. Zur Übertragung und/oder zum Empfang von Daten und/oder elektrischer Energie zur bzw. von der Basisstation 67 umfaßt die Schnittstelle 18 wenigstens eine Sende- und/oder Empfangsvorrichtung 79 in Art einer Spule 80. Dieser Sende- und/oder Empfangsvorrichtung 79 der Leseeinheit 46 ist in der Basisstation 67 eine korrespondierende Sende- und/oder Empfangsvorrichtung 81, insbesondere in Form einer weiteren Spule 82, zugeordnet Die Sende- und/oder Empfangsvorrichtungen 79, 81 bzw. deren Spulen 80, 82 sind zum Empfang und/oder zur Aussendung elektromagnetischer Felder ausgebildet. Zwischen den Spulen 80, 82 kann dabei eine berührungslose Übertragungsstrecke zur Übertragung von Energie und/oder Daten aufgebaut werden. Die der Basisstation 67 zugeordnete Sende- und/oder Empfangsvorrichtung 81 ist bevorzugt nahe der Ausnehmung 78 plaziert bzw. ist die Ausnehmung 78 von der Spule 82 wenigstens teilweise umgeben.

Die in der Basisstation 67 integrierte Sende- und/oder Empfangsvorrichtung 81 ist mit einem im Gehäuse der Basisstation 67 angeordneten, elektronischen Schaltkreis 83 verbunden. Dieser elektronische Schaltkreis 83 der Basisstation 67 dient zur Auswertung und/oder Umsetzung der zu übertragenden elektrischen Signale bzw. Daten zwischen der Leseeinheit 46 und einer übergeordneten, elektronischen Recheneinheit 19. Hierzu ist der Schaltkreis 83 bzw. die Basisstation 67 über das Kabel 20 mit einer geeigneten Schnittstelle 21 der Recheneinheit 19 verbunden, wie dies zuvor bereits erläutert wurde. Die Übertragungsstrecke zwischen der Recheneinheit 19 und der Basisstation 67 ist dabei bevorzugt als bidirektionale Datenübertragungsstrecke aufgebaut. Dieser Schaltkreis 83 kann auch als Interface-Elektronik zwischen der Leseeinheit 46 und der übergeordneten Recheneinheit 19 bezeichnet werden.

Weiters umfaßt die Basisstation 67 ein Netzteil 84 zur Umsetzung der von einem öffentlichen Energieversorgungsunternehmen bereitgestellten elektrischen Energie auf ein vom Schaltkreis 83 benötigtes Niveau. Das Netzteil 84 ist dabei ausgangsseitig mit dem Schaltkreis 83 verbunden und eingangsseitig über eine Kabelverbindung an ein öffentliches Energieversorgungsnetz anschaltbar.

Um den Energieverbrauch der Leseeinheit 46 reduzieren zu können, kann in der Leseeinheit 46 wenigstens eine Schaltvorrichtung 85 oder ein entsprechender Sensor angeordnet sein, mit welcher das Vorhandensein bzw. die ordnungsgemäße Positionierung eines zugeführten Informationsträgers 2 erfaßt werden kann. Diese Schaltvorrichtung 85 bzw. dieser Sensor ist mit der Spannungsquelle 76 bzw. dem Schaltkreis 17 gekoppelt und leitet erst bei Vorliegen einer exakten Positionierung eines geeigneten Informationsträgers eine Energieversorgung der elektrischen Komponenten der Leseeinheit 46 ein.

Wesentlich ist, daß unter Einbeziehung der Basisstation 67 eine Datenkommunikation zwischen der Leseeinheit 46 bzw. zwischen dem Datenspeicherelement oder Chip eines eingesetzten, kartenförmigen Informationsträgers und einer übergeordneten Recheneinheit 19, wie z.B. einem HOST-System bzw. einem PC, erfolgen kann. Zudem kann über die elektromagnetischen Wechselfelder der Basisstation 67 eine Auf- bzw. Nachladung der Akkumulatoren 77 bewirkt werden.

Der Ordnung halber sei abschließend darauf hingewiesen, daß zum besseren Verständnis des Aufbaus der Kontaktiereinrichtung 1 und der Leseeinheit 46 diese bzw. deren Bestandteile teilweise unmaßstäblich und/oder vergrößert und/oder verkleinert dargestellt wurden.

### Bezugszeichenaufstellung

- 1: Kontaktiereinrichtung
- 2: Informationsträger
- 3: Chip
- 4: Kontaktfeld
- 5: Kontaktierungsfläche

- 6: Aufnahmekörper
- 7: Länge
- 8: Breite
- 9: Einführöffnung
- 10: Breitseite (der Karte)

- 11: Längserstreckung
- 12: Pfeil (Zuführrichtung)
- 13: Kontaktvorrichtung
- 14: Kontaktelement
- 15: Schnittstelle

- 16: Leitung
- 17: Schaltkreis
- 18: Schnittstelle
- 19: Recheneinheit
- 20: Kabel

- 21: Schnittstelle (der Recheneinheit)
- 22: Steckverbindungsvorrichtung
- 23: Kommunikationsmittel
- 24: Kommunikatiorisnetzwerk
- 25: Modem

- 26: Anschlagelement
- 27: Durchsteckweite
- 28: Überstand
- 29: Kantenbereich
- 30: Kantenbereich

- 31: Anschlagkante
- 32: Anschlagkante
- 33: Längsmittelachse
- 34: Winkel
- 35: Durchbruch

- 36: Auflageebene
- 37: Eckbereich
- 38: Mantelfläche
- 39: Erstreckung
- 40: Abstand

- 41: Begrenzung
- 42: Erfassungsvorrichtung
- 43: Schaltelement
- 44: Schaltelement
- 45: Schreibutensil

- 46: Leseeinheit
- 47: Antenne
- 48: USB-Schnittstelle
- 49: Kontaktfahne
- 50: Betätigungselement

- 51: Schreibmine
- 52: Steckbuchse
- 53: Schreibspitze
- 54: Winkelanschlag
- 55: Begrenzungskante

- 56: Begrenzungskante
- 57: Winkel
- 58: Zuführwinkel
- 59: Schwenkachse
- 60: Federmittel

- 61: Rastelement
- 62: Positioniermittel
- 63: Führungsleiste
- 64: Führungsleiste
- 65: Schreibmine

- 66: Anzeigeeinheit
- 67: Basisstation
- 68: Eingabevorrichtung
- 69: Bedienelement
- 70: Taster

- 71: Auswahlrad
- 72: Drehachse
- 73: Doppelpfeil
- 74: Haltebügel
- 75: Sensor

- 76: Spannungsquelle
- 77: Akkumulator
- 78: Ausnehmung
- 79: Sende- und/oder Empfangsvorrichtung
- 80: Spule

- 81: Sende- und/oder Empfangsvorrichtung
- 82: Spule
- 83: Schaltkreis
- 84: Netzteil
- 85: Schaltvorrichtung

## Patentansprüche

1. Kontaktiereinrichtung (1) für kartenförmige Informationsträger (2) welche mit einem elektronischen Datenspeicherelement versehen sind, das eine kontaktbehaftete Schnittstelle mit mehreren elektrischen Kontaktierungsflächen (5) aufweist, umfassend ein Gehäuse oder einen Aufnahmekörper (6) zur zumindest teilweisen Aufnahme oder Halterung einer Kontaktvorrichtung (13) mit mehreren block- bzw. matrixartig angeordneten Kontaktelementen (14), die mit den Kontaktierungsflächen (5) eines Informationsträgers (2) in Kontaktverbindung versetzbar sind, wobei das Gehäuse oder der Aufnahmekörper (6) wenigstens ein Positioniermittel für Kantenbereiche (29, 30) eines zuführbaren Informationsträgers (2) aufweist, um die Kontaktierungsflächen (5) eines zuzuführenden Informationsträgers (2) relativ zu den Kontaktelementen (14) kontaktierend positionieren zu können, und wobei ein kontaktierend positionierter Informationsträger (2) schräg zur Längsmittelachse (33) des Gehäuses oder Aufnahmekörpers (6) ausgerichtet ist und die Kontaktvorrichtung (13) oder deren Kontaktelemente (14) in entsprechendem Ausmaß zur Längsmittelachse (33) des Gehäuses oder Aufnahmekörpers (6) schräggestellt ist/sind und eine Länge (7) des Gehäuses oder Aufnahmekörpers (6) größer bemessen ist als eine Breitenabmessung eines zuführbaren, kartenförmigen Informationsträgers (2), und im Gehäuse oder Aufnahmekörper (6) quer zu dessen Längsmittelachse (33) ein schlitzförmiger Durchbruch (35) ausgebildet ist, in dem wenigstens ein Anschlagelement (26) mit zumindest einer Anschlagkante (31, 32) für Kantenbereiche (29, 30) eines zuführbaren Informationsträgers (2) ausgebildet ist, **dadurch gekennzeichnet, daß** zwei zur Längsmittelachse (33) des Gehäuses oder Aufnahmekörpers (6) schräggestellte Anschlagkanten (31, 32) zweier zueinander distanzierter Anschlagelemente (26) im Durchbruch (35) eine Zuführbewegung eines Informationsträgers (2) in den Durchbruch (35) in Zusammenwirken mit zwei rechtwinkelig zueinander verlaufenden Kantenbereichen (29, 30) eines kartenförmigen Informationsträgers (2) relativ zum Gehäuse oder Aufnahmekörper (6) begrenzen und jedem Anschlagelement (26) zumindest ein Schaltelement (43, 44) zugeordnet und eine von einem Informationsträger (2) ordnungsgemäß eingenommene Kontaktierungsposition bei Betätigung beider Schaltelemente (43, 44) erkannt ist.

2. Kontaktiereinrichtung nach Anspruch 1, **dadurch gekennzeichnet, daß** die zwei Anschlagkanten (31, 32) in einem Winkel (34) von in etwa 90° zueinander ausgerichtet sind und die Begrenzungsanschläge für zwei im rechten Winkel zueinander verlaufende Kantenbereiche (29, 30) eines zuzuführenden Informationsträgers (2) bilden.

3. Kontakdereinrichtung nach Anspruch 1 oder 2, **dadurch gekennzeichnet, daß** ein Anschlagelement (26) als Winkelanschlag (54) mit zwei winkelig zueinander verlaufenden Begrenzungskanten (55, 56) gebildet ist.

4. Kontaktiereinrichtung nach Anspruch 3, **dadurch gekennzeichnet, daß** ein Winkel (57) zwischen den zwei Begrenzungskanten (55, 56) des Winkelanschlages (54) 90° bis 150° beträgt.

5. Kontaktiereinrichtung nach Anspruch 3 oder 4, **dadurch gekennzeichnet, daß** der Winkelanschlag (54) um eine vertikal zu einer Auflageebene (36) für einen Informationsträger (2) verlaufende Schwenkachse (59) verschwenkbar gelagert ist.

6. Kontaktiereinrichtung nach einem oder mehreren der vorhergehenden Ansprüche, **dadurch gekennzeichnet, daß** der Durchbruch (35) durch das Gehäuse oder den Aufnahmekörper (6) die Auflageebene (36) und wenigstens eine der Anschlagkanten (31, 32) zur exakten Positionierung eines zur Kontaktierung vorgesehenen Informationsträger (2) bildet.

7. Kontaktiereinrichtung nach einem oder mehreren der vorhergehenden Ansprüche, **dadurch gekennzeichnet, daß** die Anschlagelemente (26) oder Anschlagkanten (31, 32) im Gehäuse oder Aufnahmekörper (6) derart plaziert und ausgerichtet sind, daß der auf die Zuführrichtung bezogene, vordere Eckbereich (37) eines kontaktierend plazierten Informationsträgers (2) über eine Außenumgreazung oder Mantelfläche (38) des Gehäuses oder Aufnahmekörpers (6) vorragt.

8. Kontaktiereinrichtung nach einem oder mehreren der vorhergehenden Ansprüche, **dadurch gekennzeichnet, daß** ein zu kontaktierender Informationsträger (2) durch Verdrehung um eine imaginäre Vertikalachse zu seinen Flachseiten oder um die Schwenkachse (59) des Winkelanschlages (54) in die gegenüber der Längsmittelachse (33) des Gehäuses oder Aufnahmekörpers (6) schräggestellte Kontaktierungsposition gelangt.

9. Kontaktiereinrichtung nach Anspruch 5, **dadurch gekennzeichnet, daß** dem verschwenkbaren Winkelanschlag (54) ein Schaltelement (44) zugeordnet ist, das in jener Winkelstellung, in welcher ein Informationsträger (2) kontaktierend positioniert ist, betätigt ist.

10. Kontaktiereinrichtung nach einem oder mehreren der vorhergehenden Ansprüche, **dadurch gekennzeichnet, daß** das Gehäuse oder der Aufnahmekörper (6) stiftförmig ausgebildet ist und dessen dazu quer verlaufender Durchbruch (35) als Anschlagelement (26) und schlitzförmige Einführöffnung (9) für den Eckbereich (37) eines kartenförmigen Informationsträgers (2) mit Smart-Card- bzw. Scheckkarten-Format dimensioniert ist.

11. Kontaktiereinrichtung nach Anspruch 5 oder 9, **dadurch gekennzeichnet, daß** der verschwenkbar gelagerte Winkelanschlag (54) mittels wenigstens einem Federmittel (60) in eine zum Gehäuse oder Aufnahmekörper (6) nächst- oder anliegende Ruhestellung gedrückt oder zumindest teilweise in eine in die Einführöffnung (9) eingezogene Ausgangsposition gedrängt ist.

12. Kontaktiereinrichtung nach einem oder mehreren der vorhergehenden Ansprüche, **dadurch gekennzeichnet, daß** das Gehäuse oder der Aufnahmekörper (6) als tragbarer Gegenstand für den persönlichen oder alltäglichen Gebrauch ausgebildet ist.

13. Kontaktiereinrichtung nach einem oder mehreren der vorhergehenden Ansprüche, **dadurch gekennzeichnet, daß** das Gehäuse oder der Aufnahmekörper (6) als Schreibutensil (45), beispielsweise als Kugelschreiber, ausgebildet ist.

14. Kontaktiereinrichtung nach einem oder mehreren der vorhergehenden Ansprüche, **dadurch gekennzeichnet, daß** ein Taschenmesser als Gehäuse oder Aufnahmekörper (6) eingesetzt ist.

15. Kontaktiereinrichtung nach einem oder mehreren der Ansprüche 6 bis 14, **dadurch gekennzeichnet, daß** der den Einführschlitz bildende Durchbruch (35) im Gehäuse oder Aufnahmekörper (6) einen zu bearbeitenden Informationsträger (2) in den quer zur Zuführrichtung - Pfeil (12) - verlaufenden Richtungen begrenzt und gegenüber der Kontaktiervorrichtung (13) im wesentlichen unverschiebbar positioniert.

16. Kontaktiereinrichtung nach Anspruch 15, **dadurch gekennzeichnet, daß** an wenigstens einer Wandung des Durchbruches (35) warzenförmige Erhebungen und/oder elastisch nachgiebige Kartenführungen angeordnet sind und die Kontaktelemente (14) federelastisch nachgiebig in die Einführöffnung (9) bzw. in den Durchbruch (35) ragen.

17. Kontaktiereinrichtung nach einem oder mehreren der Ansprüche 3 bis 16, **dadurch gekennzeichnet, daß** der Winkelanschlag (54) haken-, L-, oder dreieckförmig ausgebildet ist und via der gehäuseseitigen Schwenkachse (59) gegenüber der Mantelfläche (38) des stab- oder stiftförmigen Gehäuses oder Aufnahmekörpers (6) aus- und einschwenkbar ist.

18. Kontaktiereinrichtung nach einem oder mehreren der Ansprüche 5 bis 17, **dadurch gekennzeichnet, daß** die Schwenkachse (59) in einem randseitigen Bereich des Gehäuses oder Aufnahmekörpers (6) ausgebildet ist.

19. Kontaktiereinrichtung nach einem oder mehreren der Ansprüche 5 bis 18, **dadurch gekennzeichnet, daß** die Schwenkachse (59) im Bereich der auf die Zuführrichtung - Pfeil (12) - bezogenen Austrittsöffnung für den Eckbereich (37) aus dem Durchbruch (35) ausgebildet ist.

20. Kontaktiereinrichtung nach einem oder mehreren der vorhergehenden Ansprüche, **dadurch gekennzeichnet, daß** diese in einer elektronischen Leseeinheit (46) zur Ausführung von Lese- und/oder Schreibvorgängen gegenüber dem elektronischen Datenspeicherelement eines zu verarbeitenden Informationsträgers (2) integriert ist.

21. Kontaktiereinrichtung nach einem oder mehreren der vorhergehenden Ansprüche, **dadurch gekennzeichnet, daß** wenigstens ein Teilbereich des Gehäuses oder Aufnahmekörpers (6), insbesondere ein Bereich um den Durchbruch (35) oder die Anschlagelemente (26), transparent oder lichtdurchlässig ausgebildet ist.

22. Leseeinheit (46) mit elektronischen Schaltkreisen (17) zumindest zum Lesen von kartenförmigen Informationsträgern (2) mit einem elektrisch zu kontaktierenden elektronischen Datenspeicherelement, **dadurch gekennzeichnet, daß** sie eine Kontaktiereinrichtung (1) nach einem oder mehreren der vorhergehenden Ansprüche aufweist.

23. Leseeinheit nach Anspruch 22, **dadurch gekennzeichnet, daß** diese länglich, insbesondere stift- oder stabförmig ausgebildet ist.

24. Leseeinheit nach Anspruch 22 oder 23, **dadurch gekennzeichnet, daß** diese als Schreibutensil (45), beispielsweise in Form eines Kugelschreibers, ausgebildet ist.

25. Leseeinheit nach einem oder mehreren der Ansprüche 22 bis 24, **dadurch gekennzeichnet, daß** diese eine Anzeigeeinheit (66), beispielsweise ein LCD-Display, umfaßt.

26. Leseeinheit nach einem oder mehreren der Ansprüche 22 bis 25, **dadurch gekennzeichnet, daß** diese eine Schnittstelle (18) zu einer übergeordneten Recheneinheit (19), insbesondere ein sogenanntes HOST-Interface, umfaßt.

27. Leseeinheit nach Anspruch 26, **dadurch gekennzeichnet, daß** die Schnittstelle (18) durch eine kontaktbehaftete Schnittstelle, insbesondere durch eine USB-Schnittstelle (48), gebildet ist.

28. Leseeinheit nach Anspruch 26, **dadurch gekennzeichnet, daß** die Schnittstelle (18) durch eine drahtlose Schnittstelle, insbesondere nach dem Bluetooth-Standard, gebildet ist.

29. Leseeinheit nach Anspruch 26 oder 28, **dadurch gekennzeichnet, daß** die Schnittstelle (18) durch eine Funkübertragungsschnittstelle gebildet ist.

30. Leseeinheit nach einem oder mehreren der Ansprüche 22 bis 29, **dadurch gekennzeichnet, daß** diese wenigstens ein von einem Benutzer betätigbares Bedienelement (69) zur Beeinflussung ihrer Betriebszustände oder ihres Betriebsverhaltens aufweist.

31. Leseeinheit nach Anspruch 30, **dadurch gekennzeichnet, daß** das Bedienelement (69) als Schalter, Taster (70) oder als Auswahlrad (71) ausgebildet ist.

32. Leseeinheit nach Anspruch 30 oder 31, **dadurch gekennzeichnet, daß** das Bedienelement (69) zur Auswahl, Bestätigung und/oder zur Eingabe eines Codes, insbesondere eines PIN-Codes, vorgesehen ist.

33. Leseeinheit nach einem oder mehreren der Ansprüche 24 bis 32, **dadurch gekennzeichnet, daß** diese eine Schreibmine (51, 65) oder einen Filzstift oder einen Schreibtintenbehälter zum Schreiben auf Papier umfaßt.

34. Leseeinheit nach einem oder mehreren der Ansprüche 22 bis 33, **dadurch gekennzeichnet, daß** sie einen Haltebügel (74) zur Befestigung an Kleidertaschen oder dgl. aufweist.

35. Leseeinheit nach einem oder mehreren der Ansprüche 22 bis 34, **dadurch gekennzeichnet, daß** ein Betätigungselement (50) zum Ein- und Ausfahren der Schreibmine (51) ein zusätzliches oder das einzige Bedienelement (69) zur Beeinflussung des Betriebsverhaltens der Leseeinheit (46) darstellt.

36. Leseeinheit nach einem oder mehreren der Ansprüche 22 bis 35, **dadurch gekennzeichnet, daß** die Spitze der Schreibmine (65) als Bedienelement (69) in Art eines Zeigegerätes bzw. Rollballes ausgebildet ist.

37. Leseeinheit nach einem oder mehreren der Ansprüche 22 bis 36, **dadurch gekennzeichnet, daß** sie wenigstens einen Sensor (75) zur Erfassung biometrischer Merkmale umfaßt.

38. Leseeinheit nach Anspruch 37, **dadurch gekennzeichnet, daß** der biometrische Sensor (75) durch einen Fingerprintsensor gebildet ist.

39. Leseeinheit nach Anspruch 37, **dadurch gekennzeichnet, daß** der biometrische Sensor (75) durch ein Mikrofon und einen nachgeschalteten Auswerteschaltkreis zur Stimmenerkennung und/oder Spracherkennung gebildet ist.

40. Leseeinheit nach einem oder mehreren der Ansprüche 22 bis **39, dadurch gekennzeichnet, daß** ein zuführbarer Informationsträger (2) zur Identifizierung und/oder Authentifizierung eines Benutzers herangezogen ist.

41. Leseeinheit nach einem oder mehreren der Ansprüche 22 bis **40, dadurch gekennzeichnet, daß** ein Sicherheitsmodul in Form eines SAM-Modules integriert ist.

42. Leseeinheit nach einem oder mehreren der Ansprüche 22 bis **41, dadurch gekennzeichnet, daß** eine Schaltvorrichtung (85) oder ein entsprechender Sensor zur Erfassung des Vorhandenseins eines Informationsträgers (2) und zur Steuerung der Energieversorgung der Leseeinheit (46) ausgebildet ist.

43. Leseeinheit nach einem oder mehreren der Ansprüche 22 bis 42, **dadurch gekennzeichnet, daß** diese elektrochemische Spannungsquellen (76), insbesondere Akkumulatoren (77) oder Batterien, zur autarken Stromversorgung umfaßt.

44. Leseeinheit nach Anspruch 43, **dadurch gekennzeichnet, daß** diese einer Basisstation (67) zur Aufladung der Akkumulatoren (77) zuordenbar ist.

45. Leseeinheit nach Anspruch 44, **dadurch gekennzeichnet, daß** eine Aufladung der Akkumulatoren (77) durch elektromagnetische Wechselfelder einer Sende- und/oder Empfangsvorrichtung (81) der Basisstation (67) durchführbar ist.

46. Leseeinheit nach einem oder mehreren der Ansprüche 22 bis 45, **dadurch gekennzeichnet, daß** mittels einer Sende- und/oder Empfangsvorrichtung (79) für elektromagnetische Felder in Bezug zu einer stationären Basisstation (67) eine Datenkommunikation zu einer übergeordneten Recheneinheit (19) via einer Verbindung über ein Kabel (20) aufbaubar ist.

47. Leseeinheit nach einem oder mehreren der Ansprüche 22 bis 46, **dadurch gekennzeichnet, daß** unter Verwendung der Basisstation (67) eine Synchronisation und/oder ein Abgleich von im Lesegerät (46) und/oder am Informationsträger (2) hinterlegten Daten mit in der übergeordneten Recheneinheit (19) hinterlegten Daten durchführbar ist.

## Claims

1. Contacting device (1) for card-type information carriers (2) provided with an electronic data memory element, having an interface incorporating contacts with several electrical contacting surfaces (5), comprising a housing or a receiving body (6) for at least partially receiving or holding a contacting device (13) with several contact elements (14) disposed in a block or matrix pattern, which can be placed in a contacting connection with contacting surfaces (5) of an information carrier (2), which housing or receiving body (6) has at least one positioning means for edge regions (29, 30) of an insertable information carrier (2) to enable the contacting surfaces (5) of an information carrier (2) to be inserted to be positioned in a contacting arrangement relative to the contact elements (14), and an information carrier (2) which is oriented at an angle relative to the longitudinal mid-axis (33) of the housing or receiving body (6) for contacting purposes, and the contact device (13) or its contact elements (14) is/are positioned at an angle to a corresponding degree relative to the longitudinal mid-axis (33) of the housing or receiving body (6), and a length (7) of the housing or receiving body (6) is longer than a widthways dimension of an insertable card-type information carrier (2), and a slot-shaped aperture (35) is provided in the housing or receiving body (6) transversely to its longitudinal mid-axis (33) in which at least one stop element (26) with at least one stop edge (31, 32) is provided for edge regions (29, 30) of an insertable card-type information carrier (2), **characterised in that** two stop edges (31, 32), positioned at an angle with respect to the longitudinal mid-axis (33) of the housing or receiving body (6), of two stop elements (26) spaced apart from one another in the aperture (35) bound an insertion movement of an information carrier (2) in the aperture (35) in co-operation with two edge regions (29, 30) of a card-type information carrier (2) disposed at a right-angle to one another relative to the housing or receiving body (6), and at least one switch element (43, 44) co-operates with each stop element (26), and a contacting position correctly assumed by an information carrier (2) is detected when the two switch elements (43, 44) are activated.

2. Contacting device as claimed in claim 1, **characterised in that** the two stop edges (31, 32) are oriented at an angle (34) of approximately 90° with respect to one another and form the boundary stops for two edge regions (29, 30) of an information carrier (2) to be inserted which extend at a right-angle with respect to one another.

3. Contacting device as claimed in claim 1 or 2, **characterised in that** a stop element (26) is provided in the form of a corner stop (54) with two boundary edges (55, 56) extending at an angle with respect to one another.

4. Contacting device as claimed in claim 3, **characterised in that** an angle (57) subtended by the two boundary edges (55, 56) of the corner stop (54) is 90° to 150°.

5. Contacting device as claimed in claim 3 or 4, **characterised in that** the corner stop (54) is mounted so as to be pivotable about a pivot axis (59) extending perpendicular to a support plane (36) for an information carrier (2).

6. Contacting device as claimed in one or more of the preceding claims, **characterised in that** the aperture (35) through the housing or receiving body (6) serves as the support plane (36) and at least one of the stop edges (31, 32) for exactly positioning an information carrier (2) provided for contacting purposes.

7. Contacting device as claimed in one or more of the preceding claims, **characterised in that** the stop elements (26) or stop edges (31, 32) are positioned and oriented in the housing or receiving body (6) in such a way that the corner region (37) of an information carrier (2) positioned in a contacting arrangement disposed foremost by reference to the insertion direction projects out beyond an external boundary or external surface (38) of the housing or receiving body (6).

8. Contacting device as claimed in one or more of the preceding claims, **characterised in that** an information carrier (2) to be contacted assumes a contacting position oriented at an angle with respect to the longitudinal mid-axis (33) of the housing or receiving body (6) by pivoting about an imaginary vertical axis with respect to its flat sides or about the pivot axis (59) of the corner stop (54).

9. Contacting device as claimed in claim 5, **characterised in that** a switch element (44) co-operates with the pivotable corner stop (54), which is activated in the angular position in which an information carrier (2) is positioned in a contacting arrangement.

10. Contacting device as claimed in one or more of the preceding claims, **characterised in that** the housing or receiving body (6) is of a pen-shaped design and its aperture (35) which extends transversely thereto and serves as a stop element (26) and slot-shaped insertion opening (9) for the corner region (37) of a card-type information carrier (2) has the dimensions of a smart card or cheque card format.

11. Contacting device as claimed in claim 5 or 9, **characterised in that** the pivotably mounted corner stop (54) is pushed into an adjacent or abutting non-operating position with respect to the housing or receiving body (6) by means of at least one spring means (60) or is at least partially forced into an inserted initial position in the insertion opening (9).

12. Contacting device as claimed in one or more of the preceding claims, **characterised in that** the housing or receiving body (6) is provided in the form of a portable object for personal or daily use.

13. Contacting device as claimed in one or more of the preceding claims, **characterised in that** the housing or receiving body (6) is provided in the form of a writing implement (45), for example a ball-point pen.

14. Contacting device as claimed in one or more of the preceding claims, **characterised in that** a pocket knife is used as the housing or receiving body (6).

15. Contacting device as claimed in one or more of claims 6 to 14, **characterised in that** the aperture (35) in the housing or receiving body (6) constituting the insertion slot bounds an information carrier (2) to be processed in the directions extending transversely to the insertion direction - arrow (12) - and is essentially positioned so that it is unable to move relative to the contacting device (13).

16. Contacting device as claimed in claim 15, **characterised in that** stud-shaped raised areas and/or elastically flexible card guides are disposed on at least one wall of the aperture (35) and the contact elements (14) project into the insertion opening (9) and into the aperture (35) in a resiliently flexible arrangement.

17. Contacting device as claimed in one or more of claims 3 to 16, **characterised in that** the corner stop (54) is of a hook-shaped, L-shaped or triangular design and can be pivoted out and in via the housing-side pivot axis (59) relative to the external surface (38) of the bar-shaped or pen-shaped housing or receiving body (6).

18. Contacting device as claimed in one or more of claims 5 to 17, **characterised in that** the pivot axis (59) is disposed in a peripheral region of the housing or receiving body (6).

19. Contacting device as claimed in one or more of claims 5 to 18, **characterised in that** the pivot axis (59) is disposed in the region of the removal opening for the corner region (37) out of the aperture (35) by reference to the insertion direction - arrow (12).

20. Contacting device as claimed in one or more of the preceding claims, **characterised in that** it is integrated in an electronic reading unit (46) for running reading and/or writing routines in co-operation with the electronic data memory element of an information carrier (2) to be processed.

21. Contacting device as claimed in one or more of the preceding claims, **characterised in that** at least a part-region of the housing or receiving body (6), in particular a region around the aperture (35) or the stop elements (26), is transparent or light-permeable.

22. Reading unit (46) with electronic circuits (17) for at least reading card-type information carriers (2), with an electronic data memory element to be placed in electrical contact, **characterised in that** it has a contacting device (1) as claimed in one or more of the preceding claims.

23. Reading unit as claimed in claim 22, **characterised in that** it is of an elongate design, in particular pen-shaped or bar-shaped.

24. Reading unit as claimed in claim 22 or 23, **characterised in that** it is provided in the form of a writing implement (45), for example in the form of a ball-point pen.

25. Reading unit as claimed in one or more of claims 22 to 24, **characterised in that** it has a display unit (66), for example an LCD display.

26. Reading unit as claimed in one or more of claims 22 to 25, **characterised in that** it has an interface (18) to a higher-level computer unit (19), in particular a so-called host interface.

27. Reading unit as claimed in claim 26, **characterised in that** the interface (18) is an interface incorporating contacts, in particular a USB interface (48).

28. Reading unit as claimed in claim 26, **characterised in that** the interface (18) is a wireless interface, in particular conforming to the Bluetooth standard.

29. Reading unit as claimed in claim 26 or 28, **characterised in that** the interface (18) is a radio transmission interface.

30. Reading unit as claimed in one or more of claims 22 to 29, **characterised in that** it has at least one control element (69) which can be operated by a user in order to influence its operating modes or its operating behaviour.

31. Reading unit as claimed in claim 30, **characterised in that** the control element (69) is provided in the form of a switch, push-button (70) or a selection dial (71).

32. Reading unit as claimed in claim 30 or 31, **characterised in that** the control element (69) is provided as a means of selecting, operating and/or inputting a code, in particular a PIN code.

33. Reading unit as claimed in one or more of claims 24 to 32, **characterised in that** it contains a writing refill (51, 65) or a felt-tipped pen or an ink container for writing on paper.

34. Reading unit as claimed in one or more of claims 22 to 33, **characterised in that** it has a clip (74) for attaching to clothing pockets or similar.

35. Reading unit as claimed in one or more of claims 22 to 34, **characterised in that** an control element (50) for retracting and extracting the writing refill (51) constitutes an additional or the sole control element (69) for influencing the operating behaviour of the reading unit (46).

36. Reading unit as claimed in one or more of claims 22 to 35, **characterised in that** the tip of the writing refill (65) is provided as a control element (69) in the form of a pointing device or roller ball.

37. Reading unit as claimed in one or more of claims 22 to 36, **characterised in that** it has at least one sensor (75) for detecting biometric characteristics.

38. Reading unit as claimed in claim 37, **characterised in that** the biometric sensor (75) is a fingerprint sensor.

39. Reading unit as claimed in claim 37, **characterised in that** the biometric sensor (75) is provided in the form of a microphone and an evaluation circuit for voice recognition or speech detection connected downstream.

40. Reading unit as claimed in one or more of claims 22 to **39, characterised in that** an insertable information carrier (2) is used as a means of identifying and/or authenticating a user.

41. Reading unit as claimed in one or more of claims 22 to **40, characterised in that** a security module in the form of a SAM module is integrated.

42. Reading unit as claimed in one or more of claims 22 to 41, **characterised in that** a switch device (85) or an appropriate sensor is provided as a means of detecting the presence of an information carrier (2) and for controlling the power supply of the reading unit (46).

43. Reading unit as claimed in one or more of claims 22 to 42, **characterised in that** it has electro-chemical voltage sources (76), in particular accumulators (77) or batteries, to provide an autonomous power supply.

44. Reading unit as claimed in claim 43, **characterised in that** it is able to co-operate with a base station (67) for charging the accumulators (77).

45. Reading unit as claimed in claim 44, **characterised in that** the accumulators (77) can be charged by electromagnetic alternating fields of a transmitter and/or receiver device (81) of the base station (67).

46. Reading unit as claimed in one or more of claims 22 to 45, **characterised in that** a data communication can be established with a higher-level computer unit (19) via a link by cable (20) by means of a transmitter and/or receiver device (79) for electromagnetic fields with respect to a stationary base station (67).

47. Reading unit as claimed in one or more of claims 22 to 46, **characterised in that** data stored in the reading device (46) and/or on the information carrier (2) can be synchronised and/or matched with data stored in the higher-level computer unit (19) using the base station (67).

## Revendications

1. Dispositif de mise en contact (1) pour des supports d'informations (2) sous forme de carte, lesquels sont dotés d'un élément électronique de mémorisation des données qui comporte une interface tributaire de contacts avec plusieurs surfaces électriques de contact (5), comprenant un boîtier ou un bâti de réception (6) pour la réception ou le maintien au moins partiels d'un dispositif de contact (13) avec plusieurs éléments de contacts (14) disposés en bloc, respectivement à la manière d'une matrice, qui peuvent être mis en liaison par contact avec les surfaces de contact (5) d'un support d'informations (2) sachant que le boîtier ou le bâti de réception (6) comporte au moins un moyen de positionnement pour les zones d'arête (29, 30) d'un support d'informations (2) pouvant être amené, pour pouvoir positionner de manière à établir un contact les surfaces de contact (5) d'un support d'informations (2) pouvant être amené relativement aux éléments de contacts (14), et sachant qu'un support d'informations (2) positionné de manière à établir un contact est aligné obliquement par rapport à l'axe longitudinal médian (33) du boîtier ou du bâti de réception (6) et que le dispositif de contact (13) ou les éléments de contacts (14) est / sont positionnés obliquement dans une mesure correspondante par rapport à l'axe longitudinal médian (33) du boîtier ou du bâti de réception (6), et qu'une longueur (7) du boîtier ou du bâti de réception (6) est dimensionnée plus grande qu'une dimension en largeur d'un support d'informations (2) en forme de carte pouvant être amené, et que dans le boîtier ou le bâti de réception (6), transversalement par rapport à son axe longitudinal médian (33), une traversée en forme de fente (35) est configurée, dans laquelle est configuré au moins un élément de butée (26) avec au moins une arête de butée (31, 32) pour les zones d'arête (29, 30) d'un support d'informations (2) pouvant être amené, **caractérisé en ce que** deux arêtes de butée (31, 32) de deux éléments de butée (26) à distance l'un de l'autre, disposées obliquement par rapport à l'axe longitudinal médian (33) du boîtier ou du bâti de réception (6), limitent dans la traversée (35), relativement au boîtier ou au bâti de réception (6), un mouvement d'amenée d'un support d'informations (2) dans la traversée (35), en concours avec deux zones d'arête (29, 30) d'un support d'informations (2) en forme de carte s'étendant perpendiculairement l'une à l'autre, et **en ce qu'**à chaque élément de butée (26) est affecté au moins un élément de commutation (43, 44) et **en ce qu'**une position de contact prise correctement par le support d'informations (2) est reconnue par actionnement des deux éléments de commutation (43, 44).

2. Dispositif de mise en contact selon la revendication 1, **caractérisé en ce que** les deux arêtes de butée (31, 32) sont orientées l'une par rapport à l'autre en un angle (34) d'environ 90° et forment les butées de limitation pour deux zones d'arête (29, 30) d'un support d'informations (2) à amener, s'étendant à angle droit l'une par rapport à l'autre.

3. Dispositif de mise en contact selon la revendication 1 ou 2, **caractérisé en ce qu'**un élément de butée (26) est configuré comme butée coudée (54) avec deux arêtes de limitation (55, 56) formant un angle entre elles.

4. Dispositif de mise en contact selon la revendication 3, **caractérisé en ce qu'**un angle (57) entre les deux arêtes de limitation (55, 56) de la butée coudée (54) est de 90° à 150°.

5. Dispositif de mise en contact selon la revendication 3 ou 4, **caractérisé en ce que** la butée coudée (54) est montée pivotante autour d'un axe de pivotement (59) s'étendant verticalement par rapport à un plan d'appui (36) pour un support d'informations (2).

6. Dispositif de mise en contact selon l'une ou plusieurs des revendications précédentes, **caractérisé en ce que** la traversée (35) à travers le boîtier ou le bâti de réception (6) forme le plan d'appui (36) et au moins une des arêtes de butée (31, 32) pour le positionnement exact d'un support d'informations (2) prévu pour la mise en contact.

7. Dispositif de mise en contact selon l'une ou plusieurs des revendications précédentes, **caractérisé en ce que** les éléments de butée (26) ou les arêtes de butée (31, 32) sont placés et orientés dans le boîtier ou le bâti de réception (6) de telle sorte que la zone de coin avant (37), rapporté à la direction de l'introduction, d'un support d'informations (2) placé avec contact dépasse au-delà d'une limitation extérieure ou d'une surface périphérique (38) du boîtier ou du bâti de réception (6).

8. Dispositif de mise en contact selon l'une ou plusieurs des revendications précédentes, **caractérisé en ce qu'**un support d'informations (2) à mettre en contact accède, par rotation autour d'un axe imaginaire vertical par rapport à ses faces planes, ou autour de l'axe de pivotement (59) de la butée coudée (54), dans la position de contact, disposée obliquement par rapport à l'axe longitudinal médian (33) du boîtier ou du bâti de réception (6).

9. Dispositif de mise en contact selon la revendication 5, **caractérisé en ce qu'**un élément de commutation (44), qui est actionné dans celle position angulaire dans laquelle un support d'informations (2) est positionné avec contact, est affecté à la butée coudée (54) pivotante.

10. Dispositif de mise en contact selon l'une ou plusieurs des revendications précédentes, **caractérisé en ce que** le boîtier ou le bâti de réception (6) est configuré en forme de cheville et **en ce que** sa traversée (35), s'étendant transversalement par rapport à lui comme élément de butée (26) et comme ouverture d'introduction en forme de fente (9), est dimensionnée pour la zone de coin (37) d'un support d'informations (2) en forme de carte du format d'une smart-card ou d'une carte d'identité eurochèque.

11. Dispositif de mise en contact selon la revendication 5 ou 9, **caractérisé en ce que** la butée coudée (54) montée pivotante est poussée dans une position de repos attenante ou contiguë par rapport au boîtier ou au bâti de réception (6) au moyen d'au moins un moyen à effet de ressort (60), ou est au moins forcée en partie dans une position initiale rétractée dans l'ouverture d'introduction (9).

12. Dispositif de mise en contact selon l'une ou plusieurs des revendications précédentes, **caractérisé en ce que** le boîtier ou le bâti de réception (6) est configuré comme objet portatif pour l'utilisation personnelle ou quotidienne.

13. Dispositif de mise en contact selon l'une ou plusieurs des revendications précédentes, **caractérisé en ce que** le boîtier ou le bâti de réception (6) est configuré comme ustensile à écrire (45), par exemple comme stylo à bille.

14. Dispositif de mise en contact selon l'une ou plusieurs des revendications précédentes, **caractérisé en ce qu'**un canif est utilisé comme boîtier ou comme bâti de réception (6).

15. Dispositif de mise en contact selon l'une ou plusieurs des revendications 6 à 14, **caractérisé en ce que** la traversée (35) formant la fente d'introduction dans le boîtier ou le bâti de réception (6) limite un support d'informations (2) à traiter dans les directions s'étendant transversalement par rapport à la direction d'introduction, flèche (12) et le positionne de manière essentiellement immuable par rapport au dispositif de contact (13).

16. Dispositif de mise en contact selon la revendication 15, **caractérisé en ce que** sur au moins une paroi de la traversée (35) sont disposées des saillies en forme de boutons et/ou des guides de carte élastiquement souples et **en ce que** les éléments de contacts (14) dépassent de manière élastiquement souple dans l'ouverture d'introduction (9), respectivement dans la traversée (35).

17. Dispositif de mise en contact selon l'une ou plusieurs des revendications 3 à 16, **caractérisé en ce que** la butée coudée (54) est configurée en forme de crochet, de L ou de triangle et peut être déployée et rétractée, par l'intermédiaire de l'axe de pivotement (59) côté boîtier, par rapport à la surface périphérique (38) du boîtier ou du bâti de réception (6) en forme de barreau ou de cheville.

18. Dispositif de mise en contact selon l'une ou plusieurs des revendications 5 à 17, **caractérisé en ce que** l'axe de pivotement (59) est configuré dans une zone de bordure du boîtier ou du bâti de réception (6).

19. Dispositif de mise en contact selon l'une ou plusieurs des revendications 5 à 18, **caractérisé en ce que** l'axe de pivotement (59) est configuré dans la zone de l'ouverture de sortie pour la zone de coin (37) de la traversée (35) rapportée à la direction d'introduction, flèche (12).

20. Dispositif de mise en contact selon l'une ou plusieurs des revendications précédentes, **caractérisé en ce que** celui-ci est intégré dans une unité de lecture électronique (46) pour l'exécution de processus de lecture et/ou d'écriture par rapport à l'élément électronique d'enregistrement de données d'un support d'informations (2) à traiter.

21. Dispositif de mise en contact selon l'une ou plusieurs des revendications précédentes, **caractérisé en ce qu'**au moins une zone partielle du boîtier ou du le bâti de réception (6) est configurée transparente ou translucide, en particulier une zone autour de la traversée (35) ou des éléments de butée (26).

22. Unité de lecture (46) avec des circuits de commutation électroniques (17) au moins pour la lecture de supports d'informations (2) en forme de carte avec un élément mémoire de données électronique pouvant être mis en contact électriquement, **caractérisée en ce qu'**elle comporte un dispositif de mise en contact (1) selon l'une ou plusieurs des revendications précédentes.

23. Unité de lecture selon la revendication 22, **caractérisée en ce que** celle-ci est configurée oblongue, en particulier en forme de cheville ou de barreau.

24. Unité de lecture selon la revendication 22 ou 23, **caractérisée en ce que** celle-ci est configurée comme ustensile à écrire (45), par exemple sous la forme d'un stylo à bille.

25. Unité de lecture selon l'une ou plusieurs des revendications 22 à 24, **caractérisée en ce que** celle-ci comporte une unité d'affichage (66), par exemple un afficheur à LCD.

26. Unité de lecture selon l'une ou plusieurs des revendications 22 à 25, **caractérisée en ce que** celle-ci comprend une interface (18) à une unité de calcul (19) dominante, en particulier une interface dite HOST.

27. Unité de lecture selon la revendication 26, **caractérisée en ce que** l'interface (18) est formée par une interface tributaire de contacts, en particulier par une interface USB (48).

28. Unité de lecture selon la revendication 26, **caractérisée en ce que** l'interface (18) est formée par une interface sans fil, en particulier d'après la norme Bluetooth.

29. Unité de lecture selon la revendication 26 ou 28, **caractérisée en ce que** l'interface (18) est formée par une interface à transmission par radio.

30. Unité de lecture selon l'une ou plusieurs des revendications 22 à 29, **caractérisée en ce que** celle-ci comporte au moins un élément de commande (69) pouvant être actionné par un utilisateur pour l'influencement de ses états de fonctionnement ou de son comportement de fonctionnement.

31. Unité de lecture selon la revendication 30, **caractérisée en ce que** l'élément de commande (69) est configuré comme un commutateur, un bouton-poussoir (70) ou une molette de sélection (71).

32. Unité de lecture selon la revendication 30 ou 31, **caractérisée en ce que** l'élément de commande (69) est prévu pour la sélection, pour la confirmation et/ou pour l'entrée d'un code, en particulier d'un code PIN.

33. Unité de lecture selon l'une ou plusieurs des revendications 24 à 32, **caractérisée en ce que** celle-ci comprend une mine de crayon (51, 65) ou un stylo feutre ou un réservoir d'encre à écrire pour écrire sur du papier.

34. Unité de lecture selon l'une ou plusieurs des revendications 22 à 33, **caractérisée en ce qu'**elle comporte un étrier de maintien (74) pour la fixation sur des poches de vêtement ou similaires.

35. Unité de lecture selon l'une ou plusieurs des revendications 22 à 34, **caractérisée en ce qu'**un élément de commande (50) pour la sortie et l'entrée de la mine de crayon (51) constitue un élément de commande (69) supplémentaire ou le seul élément de commande (69) pour l'influencement de comportement de fonctionnement de l'unité de lecture (46).

36. Unité de lecture selon l'une ou plusieurs des revendications 22 à 35, **caractérisée en ce que** la pointe de la mine de crayon (65) est configurée comme élément de commande (69) de la nature d'un appareil indicateur, respectivement d'une boule roulante.

37. Unité de lecture selon l'une ou plusieurs des revendications 22 à 36, **caractérisée en ce qu'**elle comprend au moins un capteur (75) pour la saisie de caractéristiques biométriques.

38. Unité de lecture selon la revendication 37, **caractérisée en ce que** le capteur biométrique (75) est formé par un capteur d'empreinte digitale.

39. Unité de lecture selon la revendication 37, **caractérisée en ce que** le capteur biométrique (75) est formé par un microphone et par un circuit de dépouillement en aval pour la reconnaissance de la voix et/ou de la parole.

40. Unité de lecture selon l'une ou plusieurs des revendications 22 à 39, **caractérisée en ce qu'**un support d'informations (2), pouvant être amené, est utilisé pour l'identification et/ou l'authentification d'un utilisateur.

41. Unité de lecture selon l'une ou plusieurs des revendications 22 à 40, **caractérisée en ce qu'**un module de sécurité est intégré sous la forme d'un module SAM.

42. Unité de lecture selon l'une ou plusieurs des revendications 22 à 41, **caractérisée en ce qu'**un dispositif de commutation (85) ou un capteur correspondant est configuré pour la détection de la présence d'un support d'informations (2) et pour la commande de l'alimentation en énergie de l'unité de lecture (46).

43. Unité de lecture selon l'une ou plusieurs des revendications 22 à 42, **caractérisée en ce que** cette dernière comprend des sources de tension électrochimiques (76), en particulier des accumulateurs (77) ou des piles, pour l'alimentation autarcique en courant.

44. Unité de lecture selon la revendication 43, **caractérisée en ce que** celle-ci peut être affectée à une station de base (67) pour la charge des accumulateurs (77).

45. Unité de lecture selon la revendication 44, **caractérisée en ce qu'**une charge des accumulateurs (77) peut s'effectuer par des champs électromagnétiques alternatifs d'un dispositif d'émission et/ou de réception (81) de la station de base (67).

46. Unité de lecture selon l'une ou plusieurs des revendications 22 à 45, **caractérisée en ce qu'**au moyen d'un dispositif d'émission et/ou de réception (79) pour des champs électromagnétiques en rapport avec une station de base (67) stationnaire, une communication de données peut être établie à une unité de calcul (19) dominante via une liaison par un câble (20).

47. Unité de lecture selon l'une ou plusieurs des revendications 22 à 46, **caractérisée en ce que**, moyennant l'utilisation de la station de base (67), on peut effectuer une synchronisation et/ou un alignement de données déposées dans l'appareil de lecture (46) et/ou sur le support d'informations (2) avec des données déposées dans l'unité de calcul (19) dominante.
